# EUROPEAN PATENT APPLICATION

(11) **EP 4 622 217 A1**
(43) Date of publication of application: **24.09.2025**
(21) Application number: 24773786.9
(22) Date of filing: 19.01.2024
(51) Int. Cl.: H04L 51/18

(54) **MESSAGE DISPLAY METHOD, AND MEDIUM AND ELECTRONIC DEVICE**

(30) Priority: 22.03.2023 CN 202310295330
(71) Applicant: Huawei Technologies Co., Ltd., Shenzhen, Guangdong 518129 (CN)
(72) Inventor: ZHAO, Chentao, Shenzhen, Guangdong 518129 (CN)
(74) Representative: Goddar, Heinz J.
(86) International application number: PCT/CN2024/073277
(87) International publication number: WO 2024/193217

(57) **Abstract**

Embodiments of this application provide a message display method, a medium, and an electronic device, applied to the field of communication technologies, to avoid a message loss when a message display conflict occurs and avoid displaying a message with misjudgment. The method includes: starting to display a first message, where the first message is stored in a target storage unit and is a message with a last trigger order in the target storage unit; detecting, after the first message is displayed for first time, that a second message is a message with a last trigger order in the target storage unit; and displaying the second message, where the first message continues to be stored in the target storage unit.

## Description

This application claims priority to Chinese Patent Application No. 202310295330.7, filed with the China National Intellectual Property Administration on March 22, 2023 and entitled "MESSAGE DISPLAY METHOD, MEDIUM, AND ELECTRONIC DEVICE", which is incorporated herein by reference in its entirety.

### TECHNICAL FIELD

This application relates to the field of communication technologies, and in particular, to a message display method, a medium, and an electronic device.

### BACKGROUND

With intelligentization of wearable devices such as smart watches and smart glasses, the wearable devices can provide a user with increasingly abundant messages in various scenarios such as work, life, sports, and entertainment. For example, due to high risk of diving, a wearable device such as a professional smart diving wearable device may prompt a user to pay attention to danger. However, the wearable device usually has abundant reminders and warnings, and in some scenarios, a message conflict may occur.

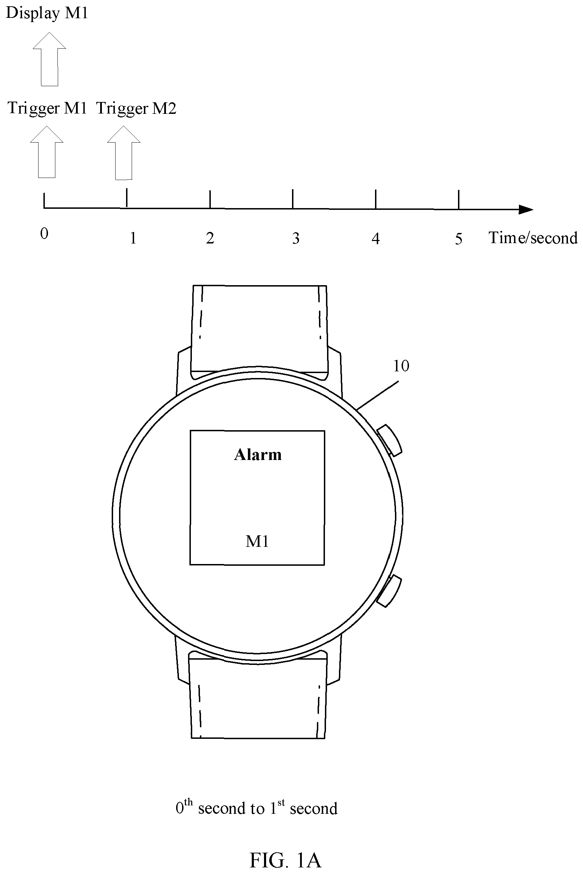

Refer to FIG. 1A, which is a diagram of a scenario in which a message conflict occurs. As shown in FIG. 1A, a wearable device 10 detects, at a 0^{th} second, that a message M1 is to be displayed, displays the message M1 at the 0^{th} second to a 1^{st} second, and detects, at the 1^{st} second, that a message M2 is to be displayed. To ensure safety of diving, the lab recommends that a reminder last for at least 5 seconds to ensure that a user can read the reminder fully. However, at the 1st second, the message M1 is displayed for only 1 second, which does not reach the specified 5 seconds. In other words, display of the message M1 is not completed. In this case, because the wearable device 10 usually displays only one message at a same moment, the wearable device 10 needs to select one of the message M1 and the message M2 for display after the 1^{st} second, that is, the two messages conflict with each other. For example, the message M1 is used to warn the user that a descent rate is too high, and the message M2 is used to remind the user that a current diving depth is normal and the user can continue to descend.

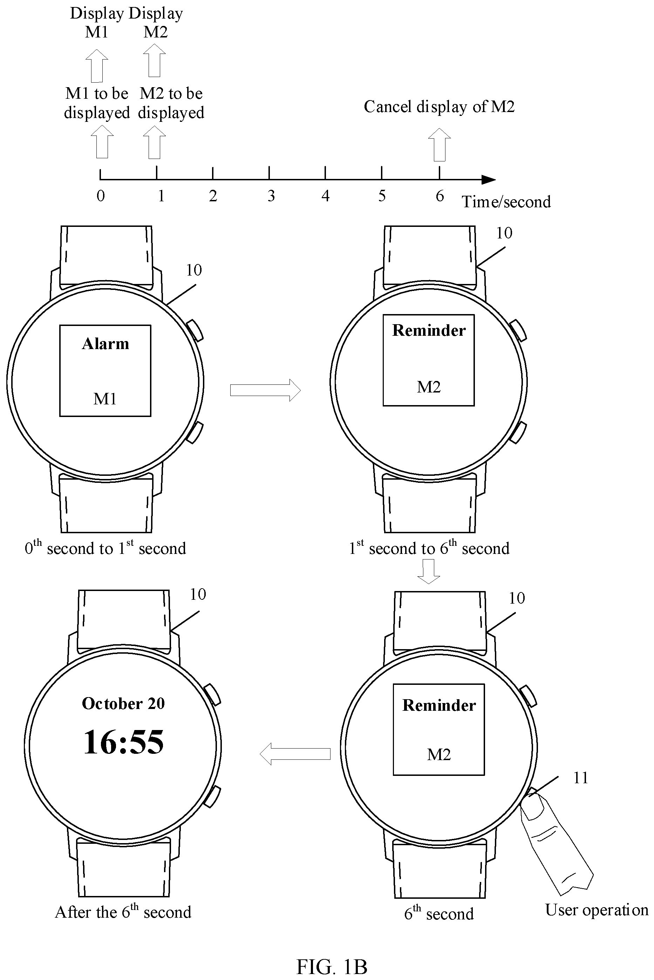

In a conventional technology, in a message conflict scenario, an electronic device displays a latest message at any time, and interrupts an existing message, causing a loss of the interrupted message. Specifically, based on the scenario in FIG. 1A, refer to FIG. 1B. The wearable device 10 directly switches the message M1 that is being displayed to the message M2 after the 1^{st} second, and discards the message M1 at the same time. In this case, because display duration of the message M1 before being interrupted is less than the specified 5 seconds, the user may not be able to clearly see the message M1, and the user cannot learn that the message M1 is lost after being interrupted. Therefore, the user misses some reminders or important alarms.

### SUMMARY

Embodiments of this application provide a message display method, a medium, and an electronic device, to avoid a message loss when a message display conflict occurs and avoid displaying a message with misjudgment.

According to a first aspect, an embodiment of this application provides a message display method, applied to an electronic device, where the method includes: starting to display a first message, where the first message is stored in a target storage unit and is a message with a last trigger order in the target storage unit; detecting, after the first message is displayed for first time, that a second message is a message with a last trigger order in the target storage unit; and displaying the second message, where the first message continues to be stored in the target storage unit. In this way, it can be ensured that the electronic device always displays a latest message, and it can be ensured that a user sees the latest message in time. In addition, the interrupted first message is continuously stored, to avoid a loss of the interrupted message.

In a possible implementation of the first aspect, the method further includes: after it is detected that display of the second message is completed, determining that the first message in the target storage unit meets a validity condition, where the first message is a message with a last trigger order in the target storage unit; and redisplaying the first message. In this way, in a scenario in which a plurality of messages conflict with each other, each message may be stored, and a latest message is first displayed, and validity determining is performed on another stored message subsequently, so as to redisplay a message that is still valid. To be specific, a message that is still valuable after being interrupted and does not have misjudgment is displayed to the user. It is ensured that the user has enough time to see an important reminder or alarm and no conflict information is lost.

In a possible implementation of the first aspect, the method further includes: The target storage unit is a message stack (that is, the stack in the following), messages enter the message stack sequentially according to trigger orders from earlier to later, and a stack top of the message stack stores a message with a last trigger order in the message stack. That is, the message in the message stack is last in first out, so as to ensure that the electronic device can always display a latest message.

In a possible implementation of the first aspect, the method further includes: after it is detected that display of the second message is completed, deleting the second message from the stack top, and moving the first message to the stack top. In this way, the first message arrives at the stack top and can be redisplayed.

In a possible implementation of the first aspect, the method further includes: when it is determined that the first message in the message stack does not meet the validity condition, deleting the first message from the stack top, and sequentially moving remaining messages in the message stack towards the stack top by one position. In this way, the invalid first message is deleted, and space of the message stack is released, so that a message that is previously triggered before the first message and interrupted can arrive at the stack top again to be redisplayed.

In a possible implementation of the first aspect, when a message type includes a reminder type and an alarm type, the validity condition includes: duration for storing a reminder-type message in the message stack is less than or equal to preset storage duration, or a trigger condition corresponding to an alarm-type message is met. In this case, the alarm-type message is relatively important and is not limited by the storage duration.

In a possible implementation of the first aspect, when a message type includes a reminder type and an alarm type, the validity condition includes: duration for storing a message in the message stack is less than or equal to corresponding preset storage duration, where preset storage duration corresponding to a reminder-type message is less than preset storage duration corresponding to an alarm-type message. In this case, the alarm-type message is relatively important, and the corresponding preset storage duration may be relatively long, for example, 7 seconds.

In a possible implementation of the first aspect, when the redisplayed first message does not meet the validity condition, displaying the first message is stopped. In this way, display of an invalid message can be avoided, in other words, an error message with misjudgment is not displayed.

In a possible implementation of the first aspect, each message in the message stack corresponds to one validity flag bit, and a value of the validity flag bit being a first value indicates that a corresponding message meets the validity condition, or a value of the validity flag bit being a second value indicates that the corresponding message does not meet the validity condition. In this way, the electronic device can quickly determine validity of a message at the stack top.

In a possible implementation of the first aspect, the method further includes: when storage duration of the reminder-type message in the message stack is less than or equal to the preset storage duration, setting the corresponding validity flag bit to the first value; or when storage duration of the reminder-type message is greater than the preset storage duration, modifying the corresponding validity flag bit from the first value to the second value; or when a trigger condition corresponding to the alarm-type message is met, setting the corresponding validity flag bit to the first value; or when a trigger condition corresponding to the alarm-type message is not met, modifying the corresponding validity flag bit from the first value to the second value. To be specific, the electronic device can modify a validity flag bit of each message in real time, to support subsequent display of a message that is still valid.

In a possible implementation of the first aspect, the method further includes: after it is detected that the second message is located at the stack top of the message stack, moving the first message from the stack top towards a stack bottom by one position in the message stack, and storing the second message onto the stack top, to redisplay the second message.

In a possible implementation of the first aspect, the method further includes: after it is detected that the second message is located at the stack top of the message stack, setting the validity flag bit corresponding to the second message to the first value. To be specific, the electronic device considers by default that a latest message is valid, and in this case, validity determining does not need to be performed on the message.

In a possible implementation of the first aspect, a display-completed message meets a preset display stop condition; and when the message type includes the reminder type and the alarm type, the preset display stop condition includes: detecting a display cancellation instruction of a user for the alarm-type message, or detecting that display duration of the reminder-type message is greater than preset display duration. To be specific, display of the reminder-type message can automatically stop, and display of the alarm-type message can be manually stopped.

In a possible implementation of the first aspect, the detecting, after the first message is displayed for first time, that a second message is a message with a last trigger order in the target storage unit includes: after the first message is displayed for the first time, detecting that the first message does not meet the preset display stop condition, and detecting that the second message is a message with a last trigger order in the target storage unit.

In a possible implementation of the first aspect, when the first message is of the reminder type, the first time is less than the preset display duration; or when the first message is of the alarm type, no display cancellation instruction of the user for the first message is detected within the first time.

In a possible implementation of the first aspect, in a case in which a message type includes a reminder type and an alarm type, each reminder-type message in the message stack corresponds to one timestamp, and an alarm-type message in the message stack has no timestamp.

According to a second aspect, an embodiment of this application provides a computer program product, where the computer program product includes instructions, and when executed, the instructions cause a computer to perform the message display method according to any one of the first aspect and the possible implementations of the first aspect.

According to a third aspect, an embodiment of this application provides a readable medium, where the readable medium stores instructions, and when executed on an electronic device, the instructions cause the electronic device to perform the message display method according to any one of the first aspect and the possible implementations of the first aspect.

According to a fourth aspect, an embodiment of this application provides an electronic device, including: a memory, configured to store instructions executed by one or more processors of the electronic device; and a processor, one of the processors of the electronic device and configured to perform the message display method according to any one of the first aspect and the possible implementations of the first aspect.

### BRIEF DESCRIPTION OF DRAWINGS

FIG. 1A is a diagram of a message conflict scenario according to an embodiment of this application;
FIG. 1B is a diagram of a message conflict scenario according to an embodiment of this application;
FIG. 1C is a diagram of message type classification according to an embodiment of this application;
FIG. 1D is a diagram of a message conflict scenario according to an embodiment of this application;
FIG. 2 is a diagram of a hardware structure of a wearable device according to an embodiment of this application;
FIG. 3A is a schematic flowchart of a message display method according to an embodiment of this application;
FIG. 3B-1 and FIG. 3B-2 are a schematic flowchart of a message display method according to an embodiment of this application;

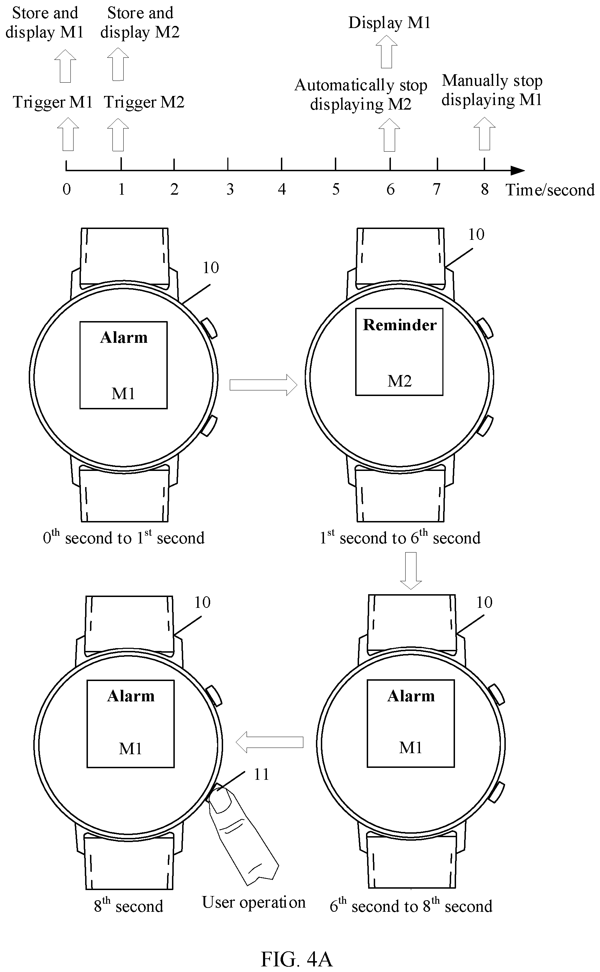

FIG. 4A is a diagram of a message conflict scenario according to an embodiment of this application;

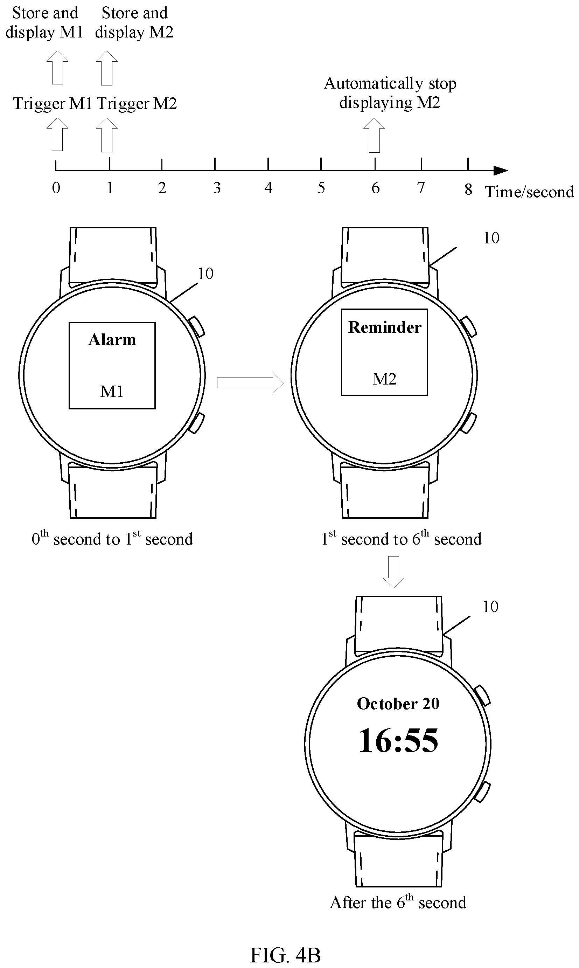

FIG. 4B is a diagram of a message conflict scenario according to an embodiment of this application;

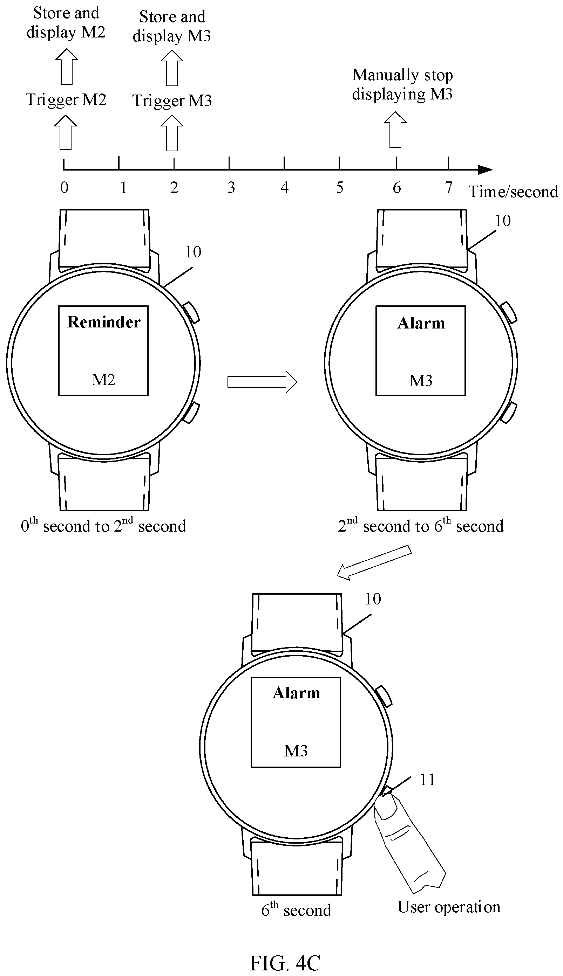

FIG. 4C is a diagram of a message conflict scenario according to an embodiment of this application;

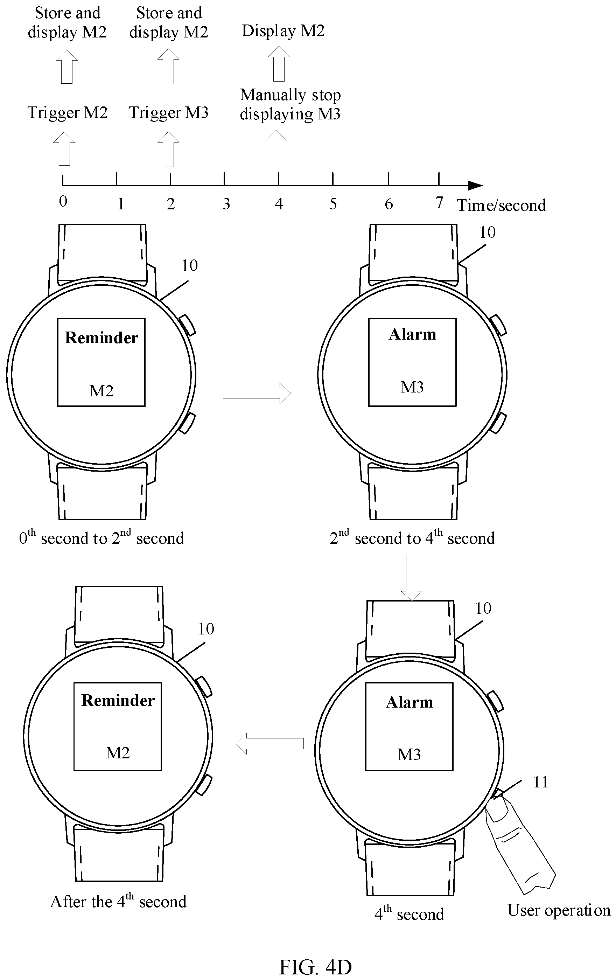

FIG. 4D is a diagram of a message conflict scenario according to an embodiment of this application;

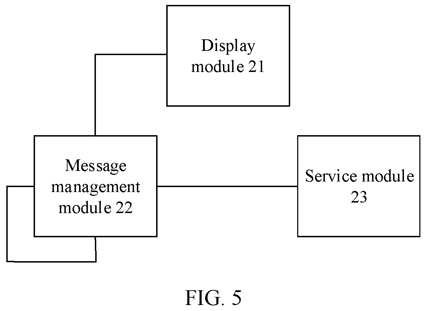

FIG. 5 is a diagram of a message management architecture according to an embodiment of this application;

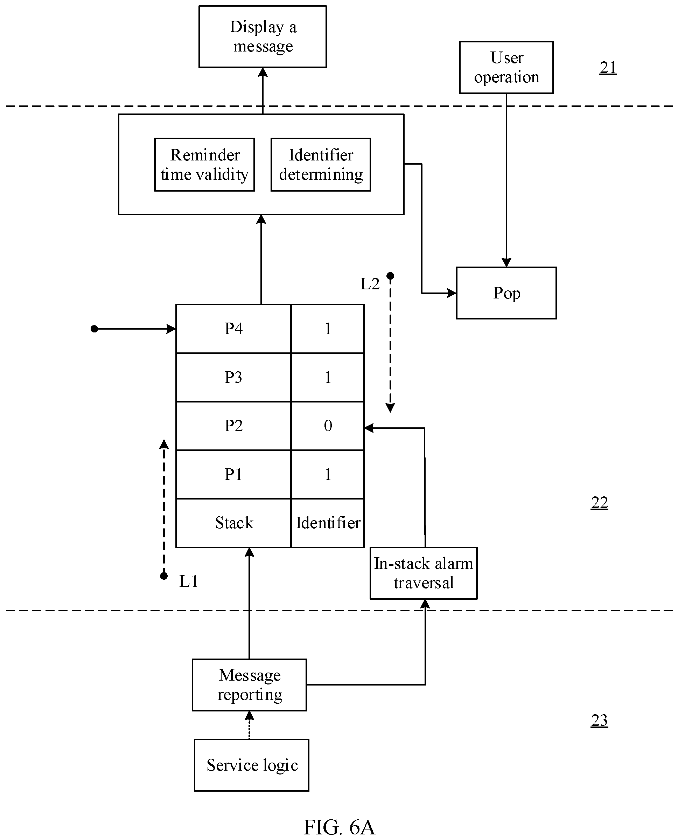

FIG. 6A is a diagram of message management in a message management architecture according to an embodiment of this application;

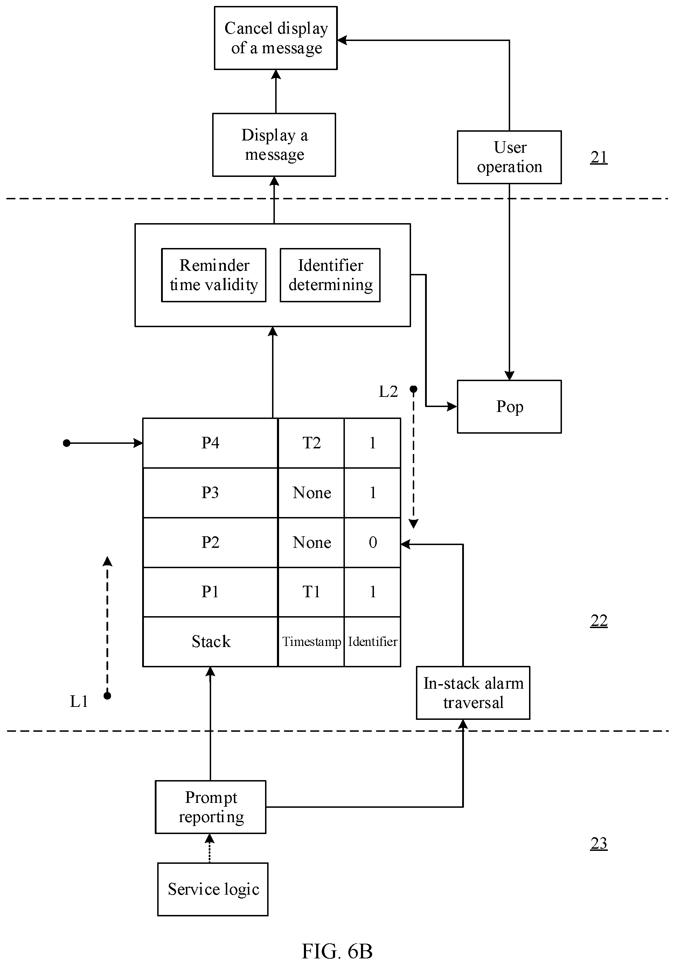

FIG. 6B is a diagram of message management in a message management architecture according to an embodiment of this application;
FIG. 7A-1 and FIG. 7A-2 are a schematic flowchart of a message display method according to an embodiment of this application;
FIG. 7B-1 to FIG. 7B-3 are a schematic flowchart of a message display method according to an embodiment of this application;

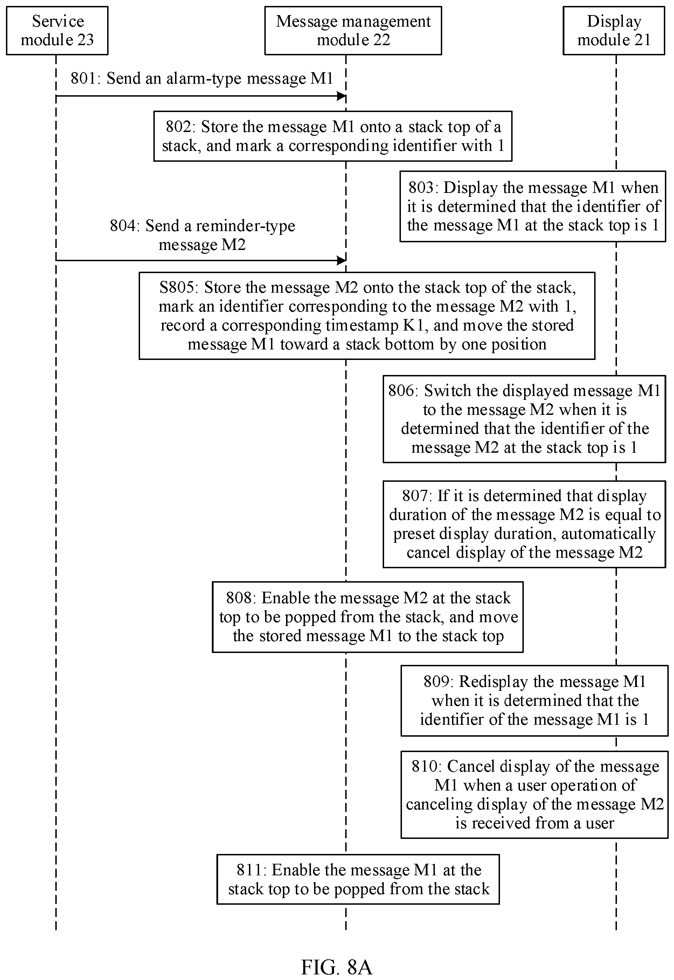

FIG. 8A is a schematic flowchart of a message display method according to an embodiment of this application;

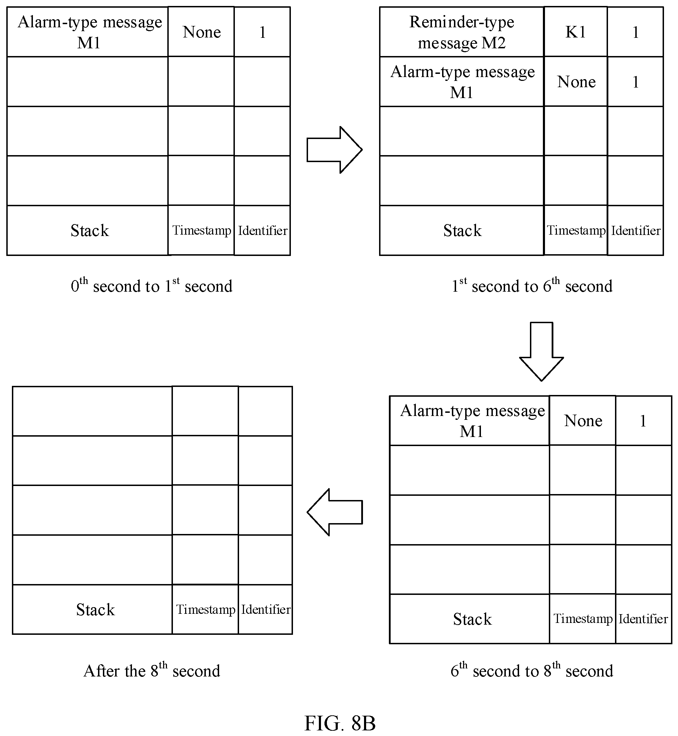

FIG. 8B is a diagram of a content change of a message display process stack according to an embodiment of this application;

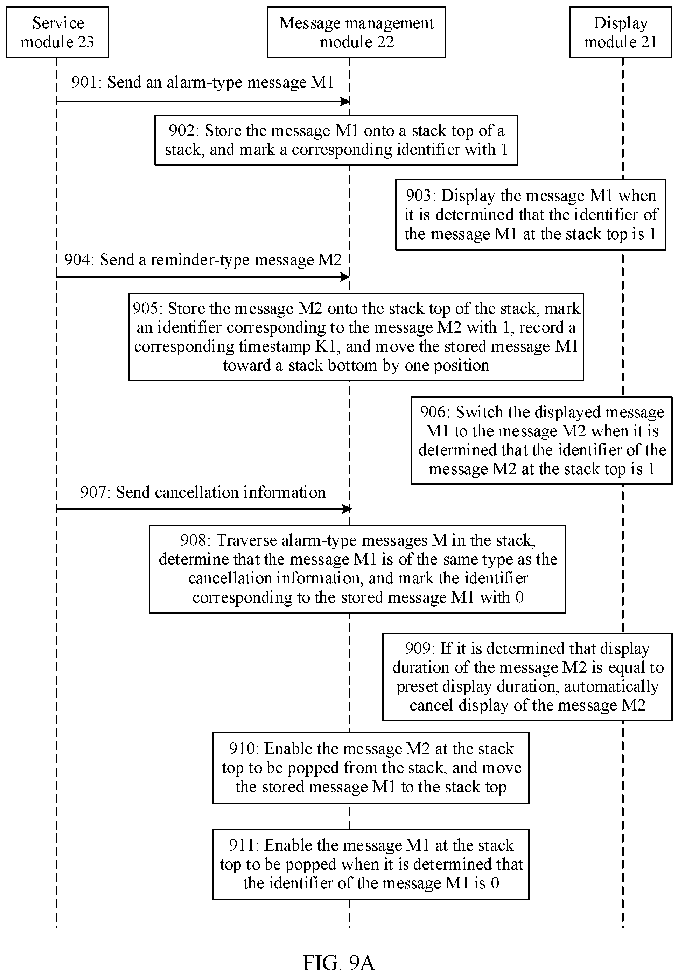

FIG. 9A is a schematic flowchart of a message display method according to an embodiment of this application;

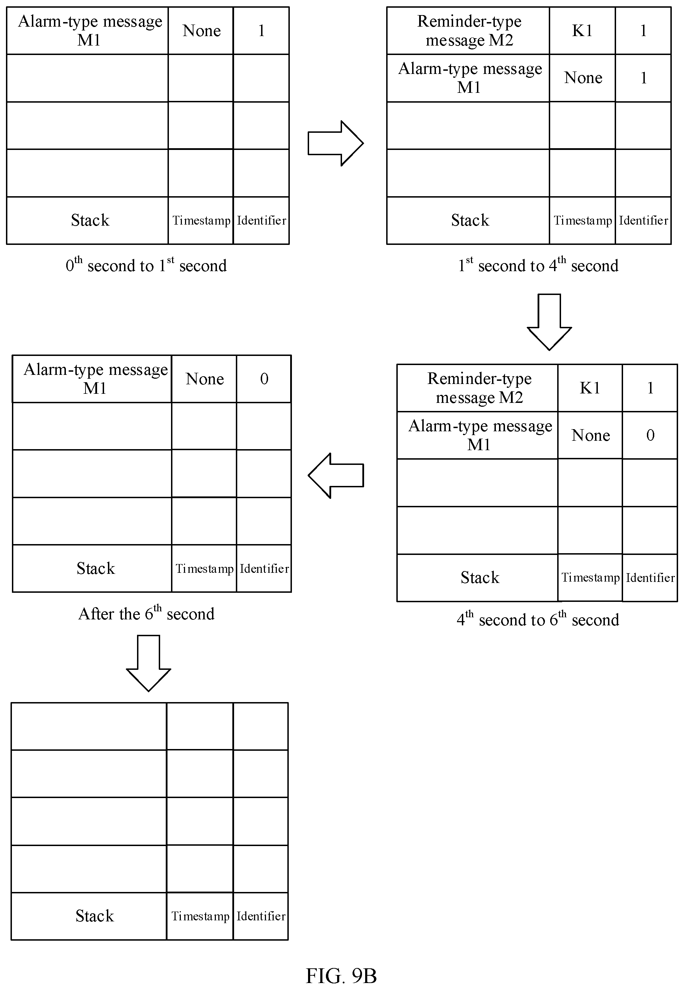

FIG. 9B is a diagram of a content change of a message display process stack according to an embodiment of this application;

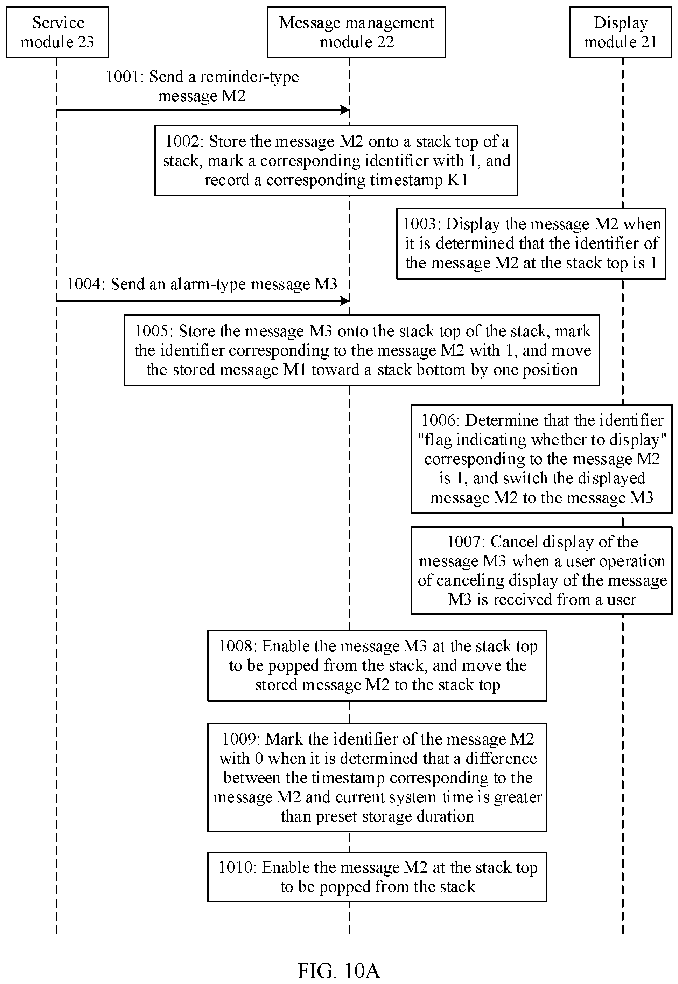

FIG. 10A is a schematic flowchart of a message display method according to an embodiment of this application;

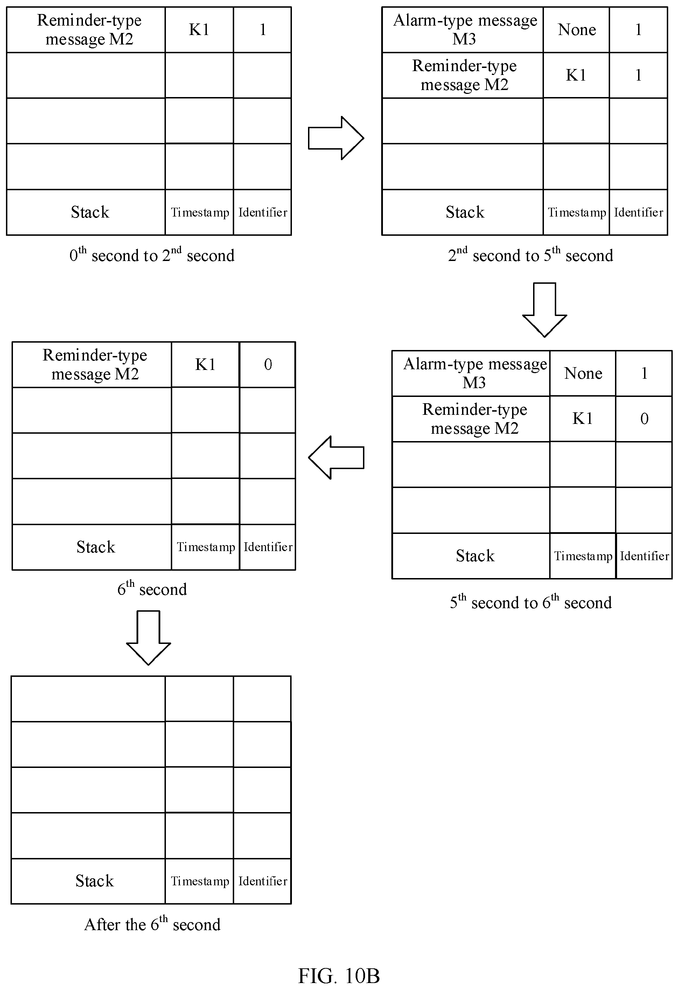

FIG. 10B is a diagram of a content change of a message display process stack according to an embodiment of this application;

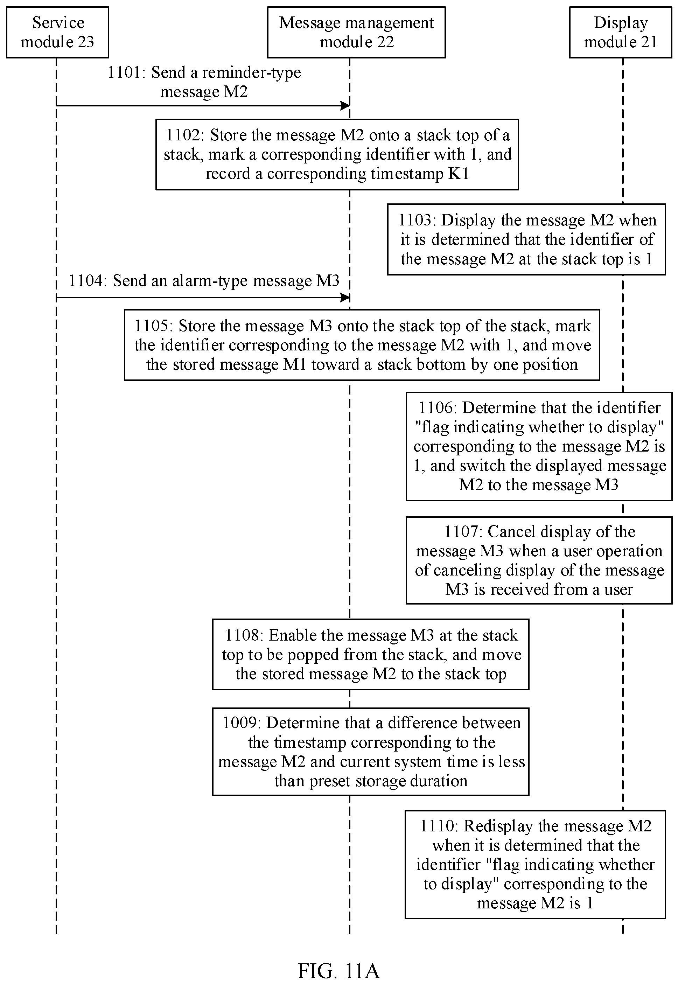

FIG. 11A is a schematic flowchart of a message display method according to an embodiment of this application; and

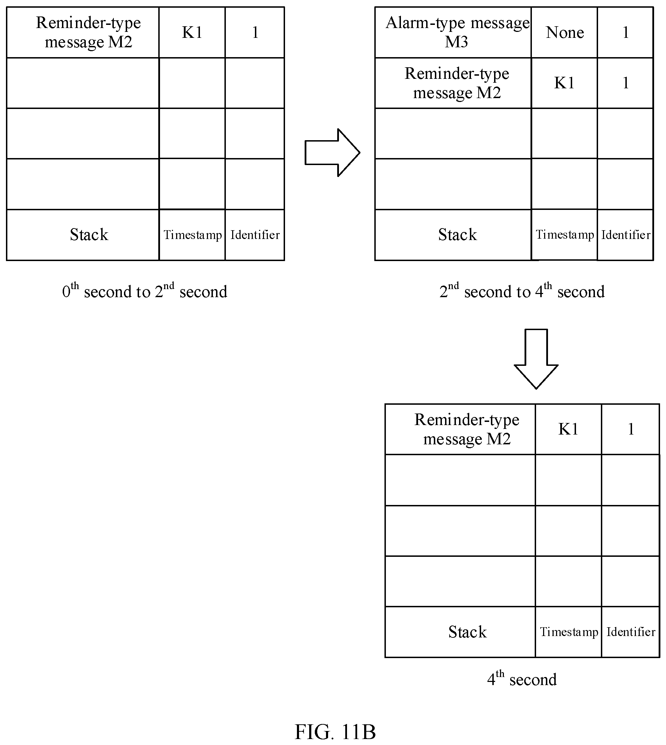

FIG. 11B is a diagram of a content change of a message display process stack according to an embodiment of this application.

### DESCRIPTION OF EMBODIMENTS

Illustrative embodiments of this application include but are not limited to a message display method, a medium, a program product, and an electronic device.

In some embodiments, the message display method provided in this application may be applied to a sports scenario such as diving, running, or cycling, but is not limited thereto. In this case, the electronic device displays various messages to a user in these scenarios.

In some embodiments, the messages displayed in this application may include message content in a form of a text, a character, a picture, or the like. It may be understood that the text in the message may also be referred to as a prompt. This is not specifically limited.

In some embodiments, the message display method provided in embodiments of this application may be applied to a scenario in which a plurality of messages conflict with each other in the electronic device, that is, display time of the plurality of messages conflicts with each other. For example, the method may be applied to the scenario in which the message M1 conflicts with the message M2 in the scenario shown in FIG. 1A.

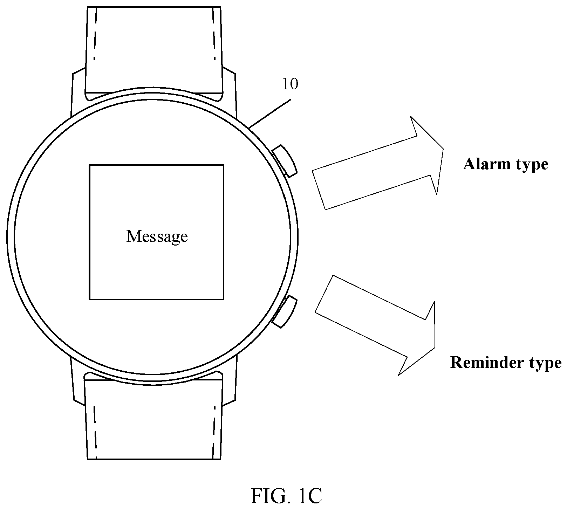

In some embodiments, the messages provided in this application may include a plurality of types. FIG. 1C is a diagram of a message type. The message type includes but is not limited to an alarm type and a reminder type (or referred to as a suggestion type) shown in FIG. 1C. For example, the message M1 shown in FIG. 1A is of the alarm type, and the message M2 is of the reminder type.

In some embodiments, in this application, a type of each message may be determined based on a trigger condition of the message. For example, messages corresponding to some preset trigger conditions are of the alarm type, and messages corresponding to other preset trigger conditions are of the reminder type.

As an example, an alarm-type message may be used to warn a user of fatal information related to life safety. For example, the message M1 may warn the user that the descent rate is too high. For another example, some other alarm-type messages may further warn the user that a maximum diving depth is about to be reached and warn the user not to descend further. For another example, some other alarm-type messages may further remind the user to switch gas to ensure smooth breathing. In diving sports, the user needs to switch a mixture of gas, such as hydrogen, oxygen, and helium, with different proportions as the diving depth changes. For another example, some other alarm-type messages may further be used to prompt that a battery level of the electronic device is too low and the electronic device is to be powered off.

As an example, a reminder-type message may provide suggestion-type information for a user. For example, in diving sports, the message M2 is used to remind the user that a current diving depth is normal and the user can continue to descend.

As described in the background, in the conventional technology, the electronic device displays a latest message at any time, but interrupts an existing message, and the interrupted message is lost. Consequently, the user misses some reminders or alarms. However, it is not suitable to discard the alarm-type and reminder-type messages, which are then missed by the user.

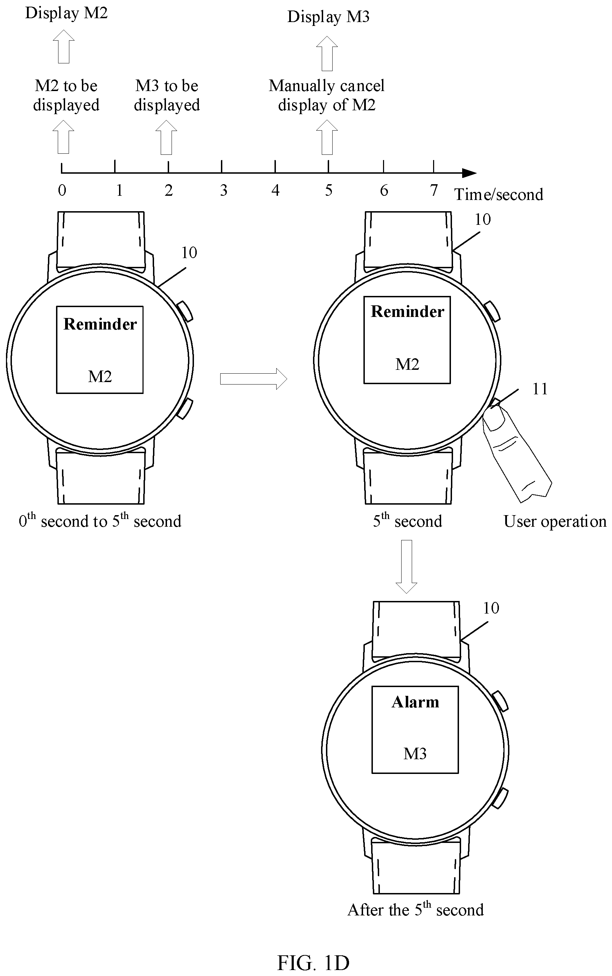

In another related technology, to resolve a problem that the user misses a message when a message conflict occurs, when a plurality of messages of the electronic device conflict with each other, display of a new message is delayed. Refer to a scenario shown in FIG. 1D. It is detected that a reminder-type message M2 is to be displayed at a 0^{th} second, and the reminder-type message M2 is displayed from the 0^{th} second to a 2^{nd} second. If it is detected, at the 2^{nd} second, that an alarm-type message M3 is to be displayed, the wearable device 10 continuously displays the message M2 from the 2^{nd} second to a 7^{th} second, so that display duration reaches 5 seconds, and then starts to display the message M3, that is, delays displaying the message M3. However, a message usually has a validity period, and a message that exceeds the validity period or does not meet a trigger condition is not only valueless, but also causes fatal misjudgment, that is, reduces time validity of a reminder and an alarm. For example, in diving sports, the message M3 may be used to warn the user that the diving depth is about to reach a maximum safe depth and the user needs to stop descending. In this case, when the message M3 is delayed for display, an actual diving depth of the user may have exceeded the maximum safe depth by a distance, causing misjudgment of the message M3.

To resolve a problem that misjudgment occurs on a displayed message when a message conflict occurs, some embodiments of this application provide a message display method. The method includes: storing messages sequentially according to trigger orders of the messages from earlier to later. In a scenario in which a plurality of messages conflict with each other, validity determining is performed on the stored messages according to the trigger orders from later to earlier, so as to display a valid message. That a message is valid means that the message has time validity and does not cause misjudgment. For example, when storage time of the message is less than or equal to preset storage duration (for example, 5 seconds), the message is considered valid. For example, refer to the scenario shown in FIG. 1A. After the message M1 is triggered, M1 may be stored, and the message M1 is displayed. If it is detected at the 1^{st} second that the message M2 is to be displayed, the message M2 may be stored, and whether M2 is valid is determined. When M2 is valid, the message M1 displayed on a display is directly switched to the message M2. Furthermore, if the message M1 is valid, the message may be stored continuously to avoid losing the message.

In this case, in the method, a latest valid message is always displayed, and after display of the latest message is completed, a message that is interrupted and that is still valid is redisplayed, so as to ensure that all messages displayed to the user have time validity, avoiding misjudgment. In addition, the method enables the user to see a latest message in time while a valid message is continuously stored, thereby avoiding a loss of an interrupted message.

In some embodiments, the foregoing trigger orders of the messages are orders from earlier to later of time at which the messages are triggered for generation, or orders from earlier to later of time at which the messages are detected by the electronic device to be displayed. This is not specifically limited in embodiments of this application.

More specifically, in some embodiments, an electronic device applicable to this application includes but is not limited to a mobile phone, a tablet computer, a wearable device, an in-vehicle device, an augmented reality (Augment Reality, AR)/virtual reality (Virtual Reality, VR) device, a notebook computer, an ultra-mobile personal computer (Ultra-Mobile Personal Computer, UMPC), a netbook, a personal digital assistant (personal digital assistant, PDA), and the like. The wearable device includes but is not limited to a professional smart diving device (such as a smart diving suit), a smartwatch, smart glasses, a smart helmet, a smart headset, a smart necklace, and the like. All these electronic devices have a display, to support the electronic device in displaying a message. In some embodiments, an example in which the electronic device is the wearable device 10 shown in FIG. 1A is used for description. The wearable device 10 in FIG. 1A is shown by merely using a smartwatch as an example, but is not limited thereto.

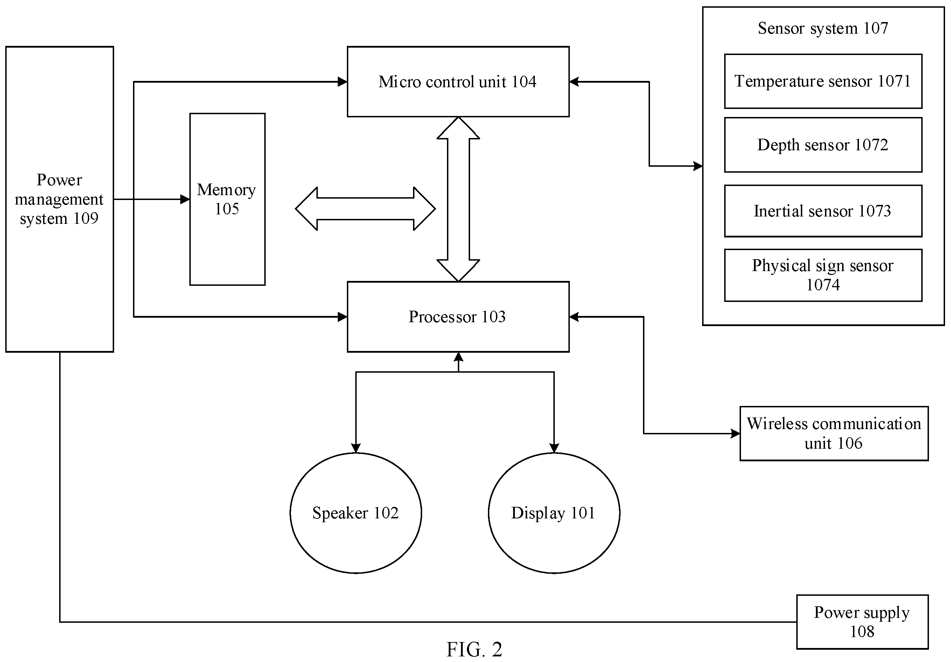

FIG. 2 is a diagram of a hardware structure of a wearable device 10 according to some embodiments of this application. For example, the wearable device may include a smartwatch body. In an embodiment of this application, a body of the wearable device 10 may include a microphone 101, a buzzer 102, a housing (the housing includes a front housing (not shown in FIG. 2) and a bottom housing (not shown in FIG. 2)), a processor 103, a micro control unit (Micro control unit, MCU) 104, a memory 105, a wireless communication unit 106, a sensor system 107, a power supply 108, a power management system 109, a display 101, and the like.

The following separately describes function components of the wearable device 10.

The display 101 is configured to display a human-computer interaction interface, an image, a video, and the like, for example, a reminder-type message or an alarm-type message in diving sports.

The buzzer 102 is configured to convert an electrical signal into a buzzing sound. For example, the wearable device 10 may produce a buzzing sound by using the buzzer 102.

The processor 103 is configured to perform system scheduling, control the microphone 101 and the buzzer 102, support processing of the wireless communication unit 106, and so on. The micro control unit 104 is configured to control a sensor in the sensor system 107, perform an operation on sensor data, communicate with the processor 103, and so on. For example, the processor 103 is configured to trigger generation of a message based on data of the sensor system 107, and store a plurality of messages that conflict with each other according to trigger orders from earlier to later, so as to display valid messages according to the trigger orders from later to earlier.

In some embodiments, the sensor system 107 may include a temperature sensor 1071, a depth sensor 1072, an inertia sensor 1073, a physical sign sensor 1074, and the like, but is not limited thereto.

In some embodiments, the micro control unit 104 is configured to analyze data of the temperature sensor 1071 to determine a temperature of an environment in which a user is located. The micro control unit 104 is further configured to analyze data of the depth sensor 1072 to determine a depth of the user descending in diving sports.

In some embodiments, the inertia sensor 1073 may include but is not limited to a gyroscope sensor, an accelerometer, and the like. For example, in some embodiments of this application, the micro control unit 104 analyzes data such as acceleration of the inertia sensor 1073 to determine a moving speed of the user in diving sports.

In some embodiments, the physical sign sensor 1074 may include a blood oxygen sensor configured to detect blood oxygen, a photo plethysmo graphic (Photo Plethysmo Graphic, PPG) sensor, an electrocardiogram (Electrocardiogram, ECG) sensor, and the like that are configured to monitor a heart rate. For example, the micro control unit 104 may be further configured to analyze data of the physical sign sensor 1074 to determine a physical sign of the user, such as blood oxygen and a heart rate, so as to provide a warning and a reminder related to a vital sign for the user in a scenario such as diving sports.

In addition, in some other embodiments, the foregoing processing of the data of the temperature sensor 1071, the depth sensor 1072, the inertia sensor 1073, and the physical sign sensor 1074 may alternatively be completed by the processor 103. This is not limited herein.

The memory 105 is configured to store a software program and various data (for example, various detection data of the wearable device 10). The processor 103 executes various function applications and data processing of the wearable device 10 by running the software program and the data that are stored in the memory 105. For example, in some embodiments of this application, the memory 105 may store data such as a temperature, a depth, an acceleration, and a user sign parameter that are collected by the sensor system 107.

The wearable device 10 implements wireless communication with another electronic device (such as a mobile phone or a tablet computer) through the wireless communication unit 106. For example, the wireless communication may include a wireless communication solution such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. For example, in some embodiments of this application, in a diving scenario, the wearable device 10 may establish a communication connection to another detection device on land by using the FM technology.

The power management system 109 is configured to connect to the power supply 108, and supply power to the display 101, the buzzer 102, the processor 103, the micro control unit 104, the memory 105, the wireless communication unit 106, the inertia sensor 107, and the like.

It may be understood that the structure shown in FIG. 2 is merely an example structure for implementing a function of the wearable device 10 in the technical solution of this application. In some other embodiments, the wearable device 10 may include more or fewer structures than those shown in FIG. 2. This is not limited herein. For example, the wearable device 10 may further include a physical button, such as a volume down button (a volume down button 11 shown in FIG. 1B), and the like.

It may be understood that, in the message display method provided in embodiments of this application, a latest message is always displayed, and a message may be redisplayed after being interrupted. Specifically, after a message is triggered, the message may start to be displayed and may be stored.

The following describes a scenario in which a message starts to be displayed and a scenario in which a message stops being displayed in embodiments of this application.

First, the scenario in which a message starts to be displayed includes:
Scenario 1: When a trigger condition of a message is met and the message is triggered for generation, the message starts to be displayed for the first time.
Scenario 2: After a display operation of a message is interrupted by a display operation of a new message, when the new message stops being displayed and the message still meets a validity condition, the message starts to be redisplayed.

Second, the scenario in which a message stops being displayed includes:
Scenario 3: When a displayed message meets a preset display stop condition, the message stops being displayed.
Scenario 4: When a message is being displayed, a new message is triggered and needs to start to be displayed, and a display operation of the message is interrupted, and the message stops being displayed.
Scenario 5: When a message starts to be redisplayed, the message stops being displayed when the message does not meet a validity condition.

In some embodiments, the preset display stop condition corresponding to the message in this application includes: (1) when display duration of a current message is greater than preset display duration; (2) the wearable device 10 receives a user instruction instructing to stop displaying a current message; and (3) a message that is currently redisplayed does not meet a validity condition.

In some embodiments, the validity condition corresponding to the message in this application includes: (4) storage duration of a current message is less than or equal to preset storage duration (for example, 5 seconds); (5) the wearable device 10 does not receive a user instruction instructing to stop displaying a current message; and (6) a trigger condition corresponding to a current message is not met.

In some embodiments, because an alarm-type message is more important than a reminder-type message, the alarm-type message may be displayed for longer duration to ensure that the alarm-type message is seen by the user. For example, preset display duration (for example, 7 seconds) corresponding to the alarm-type message is greater than preset display duration (for example, 5 seconds) corresponding to the reminder-type message. Correspondingly, preset storage duration (for example, 7 seconds) corresponding to the alarm-type message is greater than preset storage duration (for example, 5 seconds) corresponding to the reminder-type message. As an example, both the alarm-type message and the reminder-type message are corresponding to the conditions in (1) and (3) in the foregoing preset stop conditions, and both are corresponding to the condition in (4) in the foregoing validity conditions.

In some embodiments, because the alarm-type message is more important than the reminder-type message, it may be set that display of the alarm-type message is manually stopped by the user, and the reminder-type message may automatically cancel display. For example, the alarm-type message corresponds to the conditions in (2) and (3) in the foregoing preset stop conditions, and the reminder-type message corresponds to the conditions in (1) and (3) in the foregoing preset stop conditions. Correspondingly, the alarm-type message corresponds to the conditions in (5) and (6) in the foregoing validity conditions, and the reminder-type message corresponds to the condition in (4) in the foregoing validity conditions.

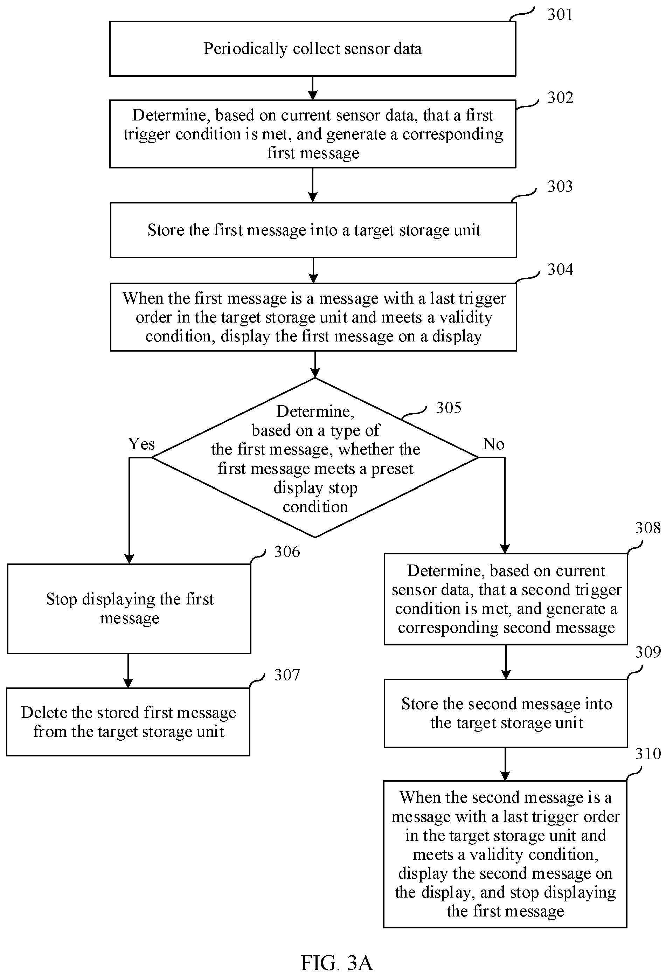

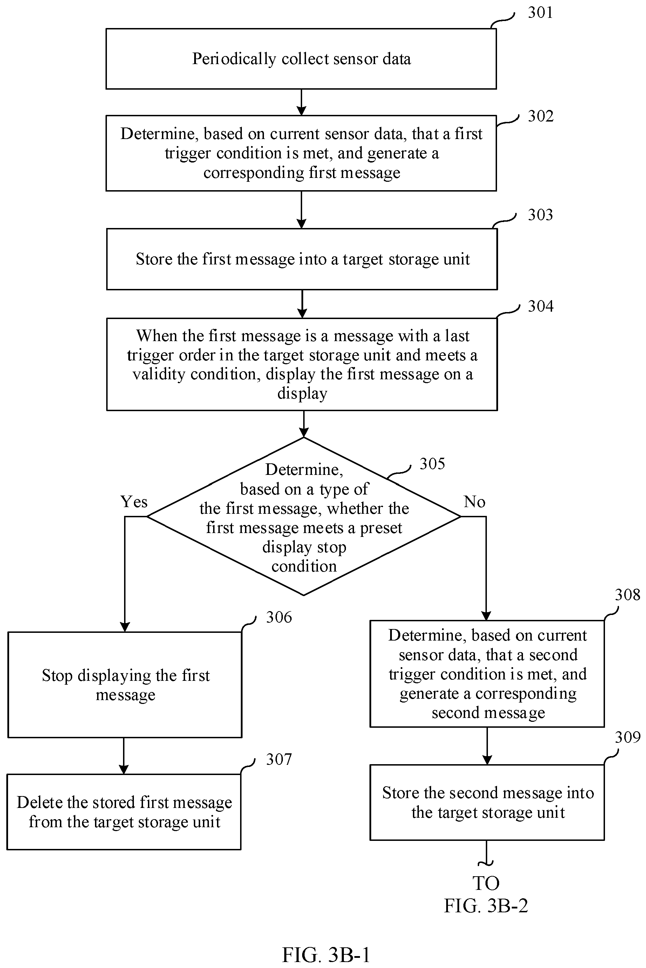

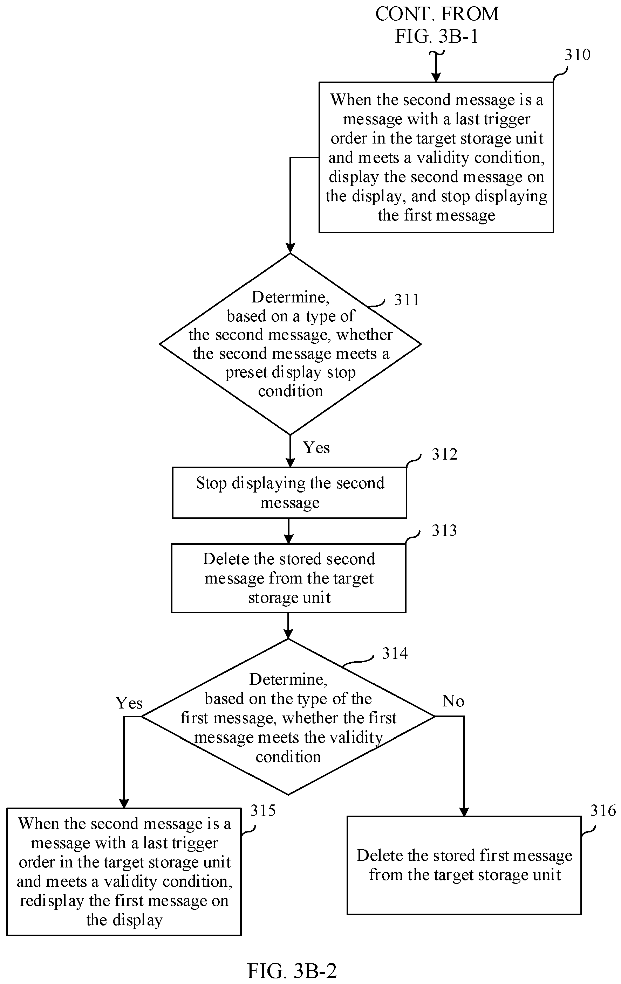

Next, refer to a schematic flowchart of a message display method shown in FIG. 3A. The message display method provided in an embodiment of this application is described by using an example in which the wearable device 10 shown in FIG. 2 is used as an execution body. Specifically, in FIG. 3A, a message display process under a conflict of a plurality of messages is described based on different types of messages and preset display stop conditions of the messages. The method includes the following steps:
S301: The wearable device 10 collects sensor data.

In some embodiments, the wearable device 10 may detect real-time sensor data, such as a temperature, a depth, an acceleration, and a sign parameter, based on the sensor system 107 shown in FIG. 2.

In some embodiments, when running a target service, the wearable device 10 may collect sensor data related to the target service, to manage and display a message for the target service. The target service belongs to an application program or a service component.

In some embodiments, the plurality of messages conflicting with each other in this application may come from a same application program or service component in an electronic device, or may come from different application programs or service components in an electronic device. For example, the application program may be a diving application, a sports and health application, and the service component may be a power management component, a device temperature detection component, or the like, but is not limited thereto. Each message is related to a corresponding application program or a service in a service component, and correspondingly a trigger condition of each message is related to a corresponding service. For example, a message corresponding to a diving application is related to a diving service, and a trigger condition of the message is related to a diving depth and a temperature. A message corresponding to the power management component is related to a battery level of the electronic device, and a trigger condition of the message is related to an actual battery level and a maximum battery level. For example, refer to the scenario shown in FIG. 1A. Both the message M1 and the message M2 that conflict with each other are corresponding to the diving application.

It may be understood that, corresponding to another application program or service component, functions of an alarm-type message and a reminder-type message may be determined based on a corresponding service, and details are not described herein.

In some embodiments, the wearable device 10 may periodically collect the sensor data, and a period of an interval for collecting the sensor data may be set based on an actual requirement. This is not specifically limited in this application.

S302: Determine, based on current sensor data, that a first trigger condition is met, and generate a corresponding first message.

In some embodiments, a plurality of trigger conditions may be preset in this application. Each trigger condition is used to trigger one message. Specifically, each trigger condition is used to perform determining on data of a sensor. Therefore, different messages correspond to different trigger conditions, and the different trigger conditions are used to define different sensor data. For example, a trigger condition corresponding to the message M1 is that the acceleration data of the acceleration sensor is greater than preset acceleration, a trigger condition corresponding to the message M2 is that a variation of the depth data of the depth sensor is greater than or equal to a preset depth variation, and a trigger condition corresponding to the message M3 is that the depth data of the depth sensor is greater than a preset maximum depth, which is not limited thereto. Specific values of the preset acceleration, the preset depth variation, and the preset maximum depth may be determined based on an actual requirement, and are not specifically limited herein.

In some embodiments, the wearable device 10 determines whether the sensor data collected in real time meets any trigger condition, to trigger generation of a corresponding message. For example, if the current sensor data meets a trigger condition corresponding to the first message in the plurality of trigger conditions, the first message is generated. On the contrary, if the current sensor data does not meet any one of the plurality of trigger conditions, no message is generated, but sensor data continues to be collected and whether any one of the trigger conditions is met continues to be determined.

In addition, in some other embodiments, the wearable device 10 may further generate a message by using data other than the sensor data, for example, generate a message by using big data information on a network side. This is not specifically limited herein.

In some embodiments, messages corresponding to some of the plurality of preset trigger conditions in this application support a display operation, and some other messages do not support a display operation. It may be understood that, in this embodiment of this application, the messages conflicting with each other are a plurality of messages that support a display operation.

In some embodiments, each message in this application may include a content field, and the content field is used to carry content information (for example, a prompt) that needs to be displayed. A content field of the message that supports a display operation carries content information, and a content field of a message that does not support a display operation is empty. In this case, the wearable device 10 displays one message, which is specifically displaying content information of the message. In this case, in this application, whether a message needs to be displayed may be determined by identifying whether a content field in the message is empty. If yes, the message does not need to be displayed. If no, the message needs to be displayed. For example, a content field in the first message carries a content message.

In some embodiments, in this application, a message that supports a display operation includes a content field, and the content field carries content information. A message that does not support a display operation does not include a content field. In this case, in this application, whether a message needs to be displayed may be determined by identifying whether the message includes a content field. If yes, the message needs to be displayed. If no, the message does not need to be displayed. For example, the first message carries a content field.

In some embodiments, each message provided in this embodiment of this application includes a type field, and the type field is used to carry a type parameter corresponding to the message. When the type parameter is a preset first-type parameter, it indicates that the message is of an alarm type. When the type parameter belongs to a preset second-type parameter, the message is of a reminder type. In this case, the type parameter in the type field in the message may be used to distinguish whether the type of the message is the alarm type or the reminder type.

In some embodiments, the first-type parameter may include a plurality of type parameters (for example, 1 to 10), and the second-type parameter may also include a plurality of type parameters (for example, 10 and 11). That is, one trigger condition corresponds to one message and one type parameter.

In some embodiments, in this application, a type parameter table may be preset, to store a preset first-type parameter and a preset second-type parameter. In this case, in this application, a table lookup manner may be used to query whether a type parameter in a message belongs to the first-type parameter or the second-type parameter in the type parameter table, to determine whether the message is of the alarm type or the reminder type.

In some embodiments, this application supports a message that does not support a display operation to include a type field. As an example, a message that does not support a display operation is usually of the alarm type, in other words, a corresponding type parameter is a first-type parameter.

In some embodiments, each message that does not support a display operation is associated with one or more alarm-type messages that support a display operation, and is used to trigger the associated alarm-type messages that support display to stop being displayed or not to be redisplayed.

In some embodiments, the type parameter table provided in this application may prestore an association relationship between a plurality of type parameters in the second-type parameter.

Therefore, in this application, when an alarm-type message that does not support a display operation is triggered, an associated type parameter may be obtained by querying the type parameter table based on a type parameter of the message, so as to trigger the associated alarm-type message that supports a display operation to stop being displayed or not to be redisplayed. In this case, it indicates that trigger conditions corresponding to the associated alarm-type messages are no longer met.

In some embodiments, the wearable device 10 may set a time field for a reminder-type message. For example, the timestamp may record a moment at which the message starts to be stored or a moment at which generation is triggered. No time field is set for an alarm-type message.

In some embodiments, the wearable device 10 may set a time field for each message. A time field of a reminder-type message carries a timestamp, and a time field of an alarm-type message is empty.

In some other embodiments, the wearable device 10 may set different type flag bits for different types of messages. For example, a value of the type flag bit being 1 indicates the alarm type, or a value of the type flag bit being 0 indicates the reminder type.

It may be understood that when generating the first message, the wearable device 10 generates each field in the message. For example, the first message includes a content field, a type field, and a timestamp field.

S303: The wearable device 10 stores the first message into a target storage unit.

In some embodiments, in this application, triggered messages may be stored in target storage space of the wearable device 10 according to trigger orders of the messages from earlier to later.

In some embodiments, no message is currently stored in the target storage unit of the wearable device 10 (including that a previously stored message has been deleted).

In some embodiments, the target storage unit of the wearable device 10 currently stores at least one message. For example, when triggering the first message, the wearable device 10 is displaying a message with a last trigger order in the target storage unit. In this case, when the first message is displayed, the message that is currently being displayed stops being displayed.

In some embodiments, when storing the first message, the wearable device 10 may store fields of the first message, such as a content field, a time field, and a type field.

For example, the wearable device 10 may distinguish a trigger order of each message by using a timestamp in a time field of the message.

In some embodiments, for a latest triggered message (for example, the first message), the wearable device 10 may consider by default that the message is valid, that is, consider by default that the message meets a validity condition.

In some embodiments, in this application, when a message is triggered and the message is stored into the target storage unit, a validity flag bit, or referred to as an identifier, or referred to as an identifier "flag indicating whether to display", may be set for the message to indicate whether the stored message is valid. For example, the validity flag bit being set to 1 indicates that the message meets the validity condition, and the validity flag bit being set to 0 indicates that the message does not meet the validity condition. Therefore, when the target storage unit stores a latest triggered first message, the corresponding validity flag bit may be set to 1.

In some embodiments, in this application, no validity flag bit may be set for a message, but a time field is used to distinguish whether the message is valid. For example, when a time field of an alarm-type message is a timestamp (that is, a value in a preset time format), it indicates that the message meets a validity condition, and when the time field is filled with a preset value (for example, 0000), it indicates that the message does not meet the validity condition. When the time field of the alarm-type message is empty, it indicates that the message meets the validity condition, and when the time field is filled with a preset value (for example, 0000), it indicates that the message does not meet the validity condition.

In some embodiments, the wearable device 10 may periodically determine whether each message in the target storage unit is valid, and adjust a value of a field such as a validity flag of a corresponding message in real time. Alternatively, the wearable device 10 may determine whether a message with a last trigger order in the target storage unit is valid.

It may be understood that a message usually has a validity period, and a message that exceeds the validity period or does not meet a trigger condition is usually valueless.

In some embodiments, storage duration may be used as a basis for determining whether a reminder-type message is valid. If the storage duration is less than or equal to preset storage duration, the stored message is considered valid. Otherwise, the stored message is considered invalid.

S304: When the first message is a message with a last trigger order in the target storage unit and meets a validity condition, display the first message on a display.

In some embodiments, the wearable device 10 may display a message in a pop-up window manner, for example, referred to as a pop-up message. Alternatively, the wearable device 10 may display a message in an interface manner, for example, referred to as an interface message. In the scenario shown in FIG. 1A, a message is displayed in a pop-up window manner, but is not limited thereto.

It may be understood that, when the wearable device 10 currently does not display any message on the display, no message conflict exists, and the wearable device 10 may directly display the new first message.

In some embodiments, if display duration of a message is relatively long, it is considered that the user has fully read the message, and the message does not need to be continuously displayed. On the contrary, if the display duration is relatively short, the message needs to be continuously displayed, so that the user learns of the message. As an example, display duration of a reminder-type message may be used as a basis for determining whether the message needs to be continuously displayed.

In some embodiments, because an alarm-type message is usually related to life safety and is relatively important, the storage duration of the first message may not be limited. Even if the storage duration is relatively long, it needs to be ensured that the user can see the interrupted message.

In some embodiments, for a message, it may be considered that a time at which the wearable device 10 starts to store the message is the same as a time at which the wearable device 10 starts to display the message, or a difference between the two is less than a preset time value.

In some embodiments, the message provided in this embodiment of this application is mainly information of a text type or an image type. In addition, in some other embodiments, when displaying a message, the wearable device 10 may further perform another prompt action, for example, playing a buzzing sound or adjusting a color of a display interface. In addition, the wearable device 10 may perform different other prompt actions for different types of messages. For example, when displaying a reminder-type message, the wearable device 10 may further adjust the color of the display interface to a lighter color such as yellow, and output a buzzing sound with a relatively low volume. When displaying an alarm-type message, the wearable device 10 may further adjust the color of the display interface to a relatively dark color such as red, and output a buzzing sound with a relatively high volume, but is not limited thereto.

S305: Determine, based on a type of the first message, whether the first message meets a preset display stop condition. If yes, S306 and S307 are performed. If no, S308 is performed.

In some embodiments, in this application, a table lookup manner may be used to query whether a type parameter in the first message belongs to the first-type parameter or the second-type parameter in the type parameter table, to determine whether the message is of the alarm type or the reminder type.

In some embodiments, the wearable device 10 may determine a type of a message by identifying whether the message carries a time field. For example, a message carrying a time field is of the reminder type, and a message not carrying a time field is of the alarm type.

In some embodiments, the wearable device 10 may determine a type of a message by identifying whether a time field in the message is empty. For example, a message whose timestamp field carries a timestamp is of the reminder type, and a message whose timestamp field is empty is of the alarm type.

In some other embodiments, the wearable device 10 may determine the type of the first message by using a value of a type flag bit in the first message.

In the message management procedure in the related technology shown in FIG. 1B or

FIG. 1D, when the wearable device 10 normally displays any message, display can be canceled only manually by the user. For example, in the scenario shown in FIG. 1B, when the wearable device 10 displays the reminder-type message M2, display can be canceled only by using a user operation. For example, at the 6^{th} second, the user presses the volume down button 11 to trigger canceling display of the message M2, and the user operation is relatively complex.

Generally, an alarm-type message is more important than a reminder-type message. In some embodiments of this application, display of different types of messages may be canceled based on different preset display stop conditions. For example, a reminder-type message is set to automatically cancel display, and an alarm-type message is set to manually cancel display. Therefore, manual operations performed by the user on the message are reduced on the whole.

For example, for a reminder-type message, a preset display stop condition includes but is not limited to: display duration is greater than preset display duration (for example, 5 seconds). In this way, the wearable device 10 may automatically cancel display of the reminder-type message, thereby avoiding an unnecessary user operation performed by the user on the reminder-type message. In this case, normal display duration of the reminder-type message reaches the preset display duration.

For example, for an alarm-type message, a preset display stop condition includes but is not limited to: receiving a cancellation instruction of the user. In this way, the wearable device 10 may cancel display of the message in response to the user cancellation instruction, to ensure that the user learns of the message. In this case, normal display duration of the alarm-type message is not limited to the preset display duration, for example, may be greater than the preset display duration, so as to ensure that the user learns of the alarm.

S306: The wearable device 10 stops displaying the first message.

In some embodiments, when the first message meets the preset display stop condition, if no new message is triggered, that is, no new message conflict exists, display of the current first message is directly canceled.

S307: The wearable device 10 deletes the stored first message from the target storage unit.

It may be understood that, if the first message meets the preset display stop condition, it indicates that the first message is already learned of by the user, and then the stored first message may be deleted to release space of the target storage unit.

S308: The wearable device 10 determines, based on current sensor data, that a second trigger condition is met, and generates a corresponding second message.

Similarly, for a description of S308, refer to the foregoing related description of S302. Details are not described herein again.

S309: The wearable device 10 stores the second message into the target storage unit.

In some embodiments, the target storage unit in the wearable device 10 currently further stores the first message that is previously triggered.

In some embodiments, for a latest triggered message (for example, the second message), the wearable device 10 may consider by default that the message is valid, that is, consider by default that the message meets a validity condition. For example, the wearable device 10 may set a validity flag bit corresponding to the second message to 1 in the target storage unit.

S310: When the second message is a message with a last trigger order in the target storage unit and meets a validity condition, display the second message on the display, and stop displaying the first message.

It may be understood that, when the first message conflicts with the second message, the wearable device 10 starts to display the second message according to trigger orders from later to earlier.

In some embodiments, for the reminder-type first message, the first message displayed on the display may be switched to the second message when current display duration is greater than or equal to the preset display duration. When the current display duration of the first message is less than the preset display duration (for example, 5 seconds), it indicates that the first message may not be clearly seen by the user. In this case, if the first message that is being displayed is switched to the second message, the first message is interrupted, that is, the first message conflicts with the second message. In this case, the latest second message is directly displayed, to ensure that the user sees the latest message in a timely manner, that is, to ensure time validity of the second message without generating misjudgment. In addition, because the first message has been stored when starting to be displayed, a loss of the interrupted first message is avoided.

In some embodiments, for the alarm-type first message, the first message displayed on the display may be switched to the second message when no user cancellation instruction is received for the first message and the first message still meets the trigger condition. This ensures that the user can see the latest message in time.

Further, based on the message display method shown in FIG. 3A, with reference to a schematic flowchart of the method shown in FIG. 3B-1 and FIG. 3B-2, a process of redisplaying the interrupted first message is described. Specifically, in FIG. 3B-1 and FIG. 3B-2, the wearable device 10 is still used as an execution body, and a message display process under a conflict of a plurality of messages is described based on different types of messages, preset display stop conditions of the messages, and a validity condition. The method includes the following steps:
S301-S310. S301-S310 shown in FIG. 3B-1 and FIG. 3B-2 are the same as S301-S310 shown in FIG. 3A, and details are not described herein again.

After S310, the method shown in FIG. 3B-1 and FIG. 3B-2 further includes the following steps:
S311: The wearable device 10 determines, based on a type of the second message, whether the second message meets a preset display stop condition. If yes, S312 is performed. If no, it is determined again, based on current sensor data, whether a new trigger condition is met, that is, whether a new message is triggered (not shown in FIG. 3B-1 and FIG. 3B-2).
   Similarly, for a description of S311, refer to the related description in S305. Details are not described herein again.
S312: The wearable device 10 stops displaying the second message.
   Similarly, that the second message stops being displayed indicates that currently the second message has been seen by the user.
S313: The wearable device 10 deletes the stored second message from the target storage unit.
S314: The wearable device 10 determines, based on the type of the first message, whether the first message meets the validity condition. If yes, S315 is performed. If no, S316 is performed.

In some embodiments, when a message is of the alarm type, validity determining on the message includes: if it is determined that the message does not meet a corresponding trigger condition, and/or a cancellation instruction of the user (for example, a press operation instruction of the user for the volume down button 11 of the wearable device 10) for the message is received, determining that the stored message is invalid. Otherwise, it is determined that the stored message is valid.

In some embodiments, when a message is of the reminder type, validity determining on the message includes: if it is determined that the message does not meet a corresponding trigger condition, and/or storage duration of the message is greater than or equal to preset storage duration, determining that the stored message is invalid. Otherwise, it is determined that the stored message is valid.

In addition, in some embodiments, a magnitude relationship between the preset storage duration and the preset display duration is not limited, and may be a relationship of being greater than, less than, or equal to. For example, when the preset storage duration is greater than the preset display duration, after the reminder-type first message is interrupted, because the storage duration of the first message is relatively long, even if the display duration of the second message reaches the preset display duration, the first message may still be valid and redisplayed to the user. For example, when the preset storage duration is less than the preset display duration (for example, 5 seconds), because the storage duration of the first message is relatively short, if the display duration of the second message reaches the preset display duration, the first message is usually valid and is no longer displayed to the user. For example, when the preset storage duration is equal to the preset display duration (for example, 5 seconds), the interrupted first message is not stored for too long, thereby ensuring time validity of the interrupted message.

S315: When the second message is a message with a last trigger order in the target storage unit and meets a validity condition, the wearable device 10 redisplays the first message on the display.

It may be understood that, because the second message has been deleted from the target storage unit, the current first message is a message with a last trigger order in the target storage unit.

In some embodiments, for redisplaying the first message, if the first message meets the preset display stop condition, the first message stops being displayed, or the first message may be redisplayed when the first message no longer meets the validity condition.

In some embodiments, for the redisplayed alarm-type first message, when the first message does not meet the corresponding first trigger condition, that is, when the wearable device 10 triggers an alarm-type message that is associated with the first message and that does not support a display operation, display of the first message may be stopped again.

In some embodiments, for the redisplayed reminder-type first message, when the storage duration of the first message in the target storage unit is greater than the preset storage duration, display of the first message is stopped, so that total duration in which the first message is stored in the target storage unit is still less than or equal to the preset storage duration.

S316: The wearable device 10 deletes the stored first message from the target storage unit.

In addition, in some other embodiments, when the wearable device 10 stores a relatively large quantity of messages, for example, a stored quantity is greater than a predetermined quantity (for example, 4), different priorities may be set for messages of different types. Therefore, for interrupted messages, validity determining may be sequentially performed on the messages in descending order of priorities, and then a valid message is displayed. For example, if a priority of the alarm type is higher than a priority of the reminder type, the wearable device 10 may redisplay a valid message of the alarm type and then redisplay a valid message of the reminder type for a stored interrupted message. In addition, if a plurality of messages of a same type are stored, validity determining may be performed sequentially according to trigger orders from later to earlier.

In this way, according to the message display method provided in this embodiment of this application, in a scenario in which a plurality of messages conflict with each other, each message may be stored, and a latest message is first displayed, and validity determining is performed on another stored message subsequently, so as to redisplay a message that is still valid. To be specific, a message that is still valuable after being interrupted and does not have misjudgment is displayed to the user. It is ensured that the user has enough time to see an important reminder or alarm and no conflict information is lost.

Next, based on the message display method shown in FIG. 3B-1 and FIG. 3B-2, with reference to scenarios shown in FIG. 4A to FIG. 4D, specific processes in which a conflict occurs between messages of different types corresponding to embodiments of this application are described.

Based on the method shown in FIG. 3B-1 and FIG. 3B-2, FIG. 4A shows a scenario in which an alarm-type message is switched to a reminder-type message and the interrupted alarm-type message is redisplayed. In FIG. 4A, the wearable device 10 detects, at a 0^{th} second, that an alarm-type message M1 is triggered, stores the message M1, and displays the message M1 on the display from the 0^{th} second to a 1^{st} second. When it is detected, at the 1^{st} second, that a reminder-type message M2 is triggered, the message M2 may be stored, and the message M1 displayed on the display is switched to the message M2. In this case, display of the message M1 is interrupted at the 1^{st} second, that is, the message M1 is an interrupted message. In this case, display of the reminder-type message M2 may be automatically canceled. For example, the message M2 is continuously displayed on the display from the 1^{st} second to the 6^{th} second for the preset display duration (for example, 5 seconds), so that the user has sufficient time to view a latest message, and display of the message M2 is automatically canceled after the 6^{th} second. Therefore, a conflicting message is not lost, so that the user does not miss an important warning or reminder. Further, when determining that the stored alarm-type message M1 is still valid, for example, when a trigger condition corresponding to the message M1 is still met, the wearable device 10 may redisplay the message M1, for example, continue to display M1 from the 6^{th} second to the 8^{th} second. Further, when the user learns of the alarm-type message M1 from the 6^{th} second to the 8^{th} second, the user may click the volume down button 11 of the wearable device 10 after the 8^{th} second to manually cancel display of the message M1, so as to ensure that the user learns of an important warning. In this case, a user instruction for clicking the volume down button 11 of the wearable device 10 may be the foregoing user cancellation instruction. Therefore, it is ensured that the latest message M2 is displayed to the user in time, and an interrupted message that is still valid can be redisplayed, so that all displayed messages have time validity. In this way, the user is prevented from missing an important alarm or reminder, and a message with misjudgment is prevented from being displayed.

It may be understood that the wearable device 10 triggers the message M1 and the message M2 in sequence, so that the wearable device 10 first stores the message M1 and then stores the message M2 according to trigger orders, and first displays the message M2 and then displays the message M1 that is still valid according to the trigger orders from later to earlier. If the message M1 is invalid when display of the message M2 is completed, the message M1 no longer needs to be displayed.

In some embodiments, time consumed from detecting that a message is triggered to storing the message is generally short. For example, in the scenario shown in FIG. 4A, time consumed in a process from detecting that the message M2 is triggered to storing the message M2 is relatively short. Therefore, it may be considered that the message M2 starts to be displayed from the 1^{st} second, but actually, the message M2 starts to be displayed between the 1^{st} second and the 2^{nd} second.

Further, based on the scenario shown in FIG. 4A, refer to FIG. 4B, which shows a scenario in which an alarm-type message is switched to a reminder-type message and an interrupted message is no longer displayed. As shown in FIG. 4B, the wearable device 10 displays the alarm-type message M1 from the 1^{st} second to a 4^{th} second, and continuously displays the reminder-type message M2 from the 1^{st} second to the 6^{th} second. After the message M1 is interrupted and before display of the new message M2 is canceled, the stored message M1 does not meet the trigger condition, which indicates that the message M1 is invalid after the 6^{th} second, and is no longer displayed. In this case, the message M2 stops being displayed at the 6^{th} second, and the stored message M1 is deleted.

In addition, based on the method shown in FIG. 3B-1 and FIG. 3B-2, a scenario in which a reminder-type message is switched to an alarm-type message and the interrupted reminder-type message is no longer displayed in FIG. 4C is described. When it is detected, at the 0^{th} second, that the reminder-type message M2 is triggered, the message M2 is considered valid by default, the message M2 may be stored, and the message M2 may be displayed from the 0^{th} second to the 2^{nd} second. Further, it is detected at the 2^{nd} second that an alarm-type message M3 is triggered, the message M3 may be stored, and the message M2 on the display is switched to the message M3. Therefore, the display displays the latest message M3 in real time, and time validity of the message M3 is ensured. At the 6^{th} second, the user clicks the volume down button 11 of the wearable device 10 to manually cancel display of the message M3, and stops displaying the message M3. In this case, the storage duration of the reminder-type message M2 is 6 seconds, which is greater than 5 seconds specified in the preset storage duration, indicating that the message M2 is invalid because the message M2 no longer has time validity after the 6^{th} second. Compared with the message management procedure shown in FIG. 1D, the message management procedure shown in FIG. 4C directly displays a latest message, and does not re-present an invalid message to the user.

Further, based on the scenario shown in FIG. 4C, refer to FIG. 4D, which shows a scenario in which a reminder-type message is switched to an alarm-type message and an interrupted message is redisplayed. As shown in FIG. 4D, when the wearable device 10 is displaying the message M2 from the 2^{nd} second to the 4^{th} second, the volume down button 11 of the wearable device 10 is manually clicked after the 4^{th} second to manually cancel display of the message M3. Further, at the 4^{th} second, storage duration of the reminder-type message M2 is 4 seconds, which is less than 5 seconds specified in the preset storage duration. This indicates that the message M2 is still valid after the 4^{th} second, and the valid message M2 may be redisplayed on the display. In addition, when the storage duration of the message M2 is greater than the preset storage duration of 5 seconds, the redisplayed message M2 stops being displayed, that is, the message M2 is redisplayed for 1 second. In this way, the message M2 that is interrupted during a conflict is redisplayed to the user, so as to prevent the user from missing an important reminder.

Further, in some embodiments, the electronic device may sequentially store conflicting messages according to trigger orders by using a stack, and display the conflicting messages in a last-in first-out order of the stack. It may be understood that, for ease of description, the stack provided in embodiments of this application may also be referred to as a message stack or a message stack, but does not affect essence of the stack, and both limit the stack to be used to store a message such as a message.

According to the message display method provided in some embodiments of this application, to-be-displayed messages may be sequentially stored onto a stack according to trigger orders, so that a latest message is at a stack top. Further, validity determining is performed on each message stored in the stack in a last-in first-out order, for example, whether storage duration of the message reaches preset storage duration or whether a trigger condition is still met. Specifically, a message at the stack top is displayed immediately when it is determined that the message is valid. When it is determined that the message at the stack top is invalid, the message is popped from the stack, remaining messages in the stack move towards the stack top sequentially by one position, and then validity determining on the message at the stack top is performed again until the messages in the stack are all processed. It may be understood that, when the messages stored in the stack cyclically enter the stack top, if the message is still valid, the message may be redisplayed, so as to avoid a case that the valid message is lost and cannot be displayed, and an invalid message is not displayed. In other words, time validity of each message is ensured when a conflict occurs, and no misjudgment is caused.

It may be understood that the stack may be implemented by using the target storage unit of the wearable device 10.

Next, FIG. 5 is a diagram of a message management architecture according to an embodiment of this application. The architecture includes a display module 21, a message management module 22, and a service module 23. For example, a function of the display module 21 may be implemented by interaction between the display 101 and the processor 103 shown in FIG. 2, a function of the message management module 22 may be implemented by the processor 103, and a function of the service module 23 may be implemented by interaction between the sensor system 107, the micro control unit 104, and the processor 103.

The service module 23 is configured to report various types of messages based on a running actual service. For example, the service module 23 may report various types of messages for a diving service. Specifically, the service module 23 may determine, based on collected sensor data, whether each trigger condition corresponding to the diving service is met, so as to generate a message meeting the trigger condition, and send the generated message to the message management module 22.

**In** some embodiments, messages provided in this application include a plurality of reporting categories, some reporting categories have no display operation, and some other reporting categories have a display operation. For example, a message whose type parameter is a first type parameter and does not include content information has no display operation.

For example, the reporting categories of the messages provided in this application include the following three types:
Type I reporting: used to report a reminder-type message. For example, a message in this type of reporting is automatically cleared when display duration reaches 5 seconds, that is, the message is automatically displayed when the preset display duration is reached.
Type II reporting: used to report an alarm-type message. In this case, a message in this type of reporting is not automatically cleared. The message needs to be cleared by confirmation and operation by the user.
Type III reporting: used to clear an alarm-type message. No display operation is performed on information in this type of reporting. When a trigger condition corresponding to a message in the type III reporting is met, it indicates that a trigger condition corresponding to an associated alarm-type message supporting a display operation is no longer met. In this case, the type III reporting is used to invalidate an associated alarm-type message supporting a display operation. It may be understood that one piece of information in the type III reporting corresponds to one message in the type II reporting, and the two types of reporting correspond to associated trigger conditions, that is, the two types of reporting correspond to associated type parameters.

The message management module 22 is configured to use a set stack management message. In some embodiments, an identifier, also referred to as a validity flag bit, or referred to as "flag indicating whether to display" is set in a stack.

As an example, for messages corresponding to the type 1 reporting and the type 2 reporting, the messages may be pushed onto the stack, and identifiers "flag indicating whether to display" of the messages are marked with 1. For information in the type 3 reporting, an identifier "flag indicating whether to display" of a message corresponding to the type 2 reporting in the stack is marked with 0.

In addition, the stack may push a message in the type 1 reporting onto the stack and add a timestamp, and determine in-stack time of the message every second. Identifiers "flag indicating whether to display" of all messages whose storage duration exceeds preset storage duration (for example, 5 seconds) are marked with 0.

The display module 21 is configured to display a message that is at a stack top in the stack and whose identifier "flag indicating whether to display" is marked with 1. In addition, a message at the stack top may be popped when the user manually cancels display, and a message whose identifier "flag indicating whether to display" is marked with 0 at the stack top is not directly popped.

Next, based on FIG. 5, with reference to a message management architecture shown in FIG. 6, a message management process based on a specified stack is described in detail.

Refer to the architecture shown in FIG. 6A and FIG. 6B. The architecture is divided into three layers based on the service module 23, the message management module 22, and the display module 21.

The service module 23 may report a message based on service logic of a running service, that is, report the type I reporting and the type II reporting to the stack set in the message management module 22. For example, the service module 23 may sequentially report a reminder-type message P1, an alarm-type message P2, an alarm-type message P3, and a reminder-type message P4. In this case, these messages conflict with each other. It may be understood that reporting orders of messages are trigger orders, and this is not specifically distinguished in this application.

In an aspect, the message management module 22 may sequentially store the reminder-type message P1, the alarm-type message P2, the alarm-type message P3, and the reminder-type message P4 according to a reporting order indicated by an arrow L1, and mark identifiers "flag indicating whether to display" of messages in the type I reporting and the type II reporting 2 with 1. In another aspect, when the type III reporting is received, in-stack alarm traversal may be performed on the stack based on a type parameter in a message in the type III reporting, and an alarm-type message corresponding to the type III is determined, that is, an alarm-type message in which a type parameter associated with the type parameter is located, so as to clear the message. Specifically, an identifier "flag indicating whether to display" corresponding to the message is marked with 0. For example, the message management module 22 determines that the type II reporting having a same type of trigger condition as the current type III reporting is the alarm-type message P2, so as to mark an identifier "flag indicating whether to display" of the alarm-type message P2 with 0. In still another aspect, the message management module 22 may further enable the message at the stack top to be popped from the stack to delete the message stored at the stack top. For example, the message management module 22 may enable the message at the stack top to be popped when the identifier "flag indicating whether to display" of the message at the stack top is marked with 0 and a user operation of display of the message (that is, a user cancellation instruction) is received. Then, when no new message is pushed onto the stack, remaining messages in the current stack may be sequentially moved towards the stack top by one position, so as to fill the stack top with a message again.

The message management module 22 may determine reminder time validity of the message at the stack top and perform identifier determining, so as to determine whether to notify the display module 21 to display the message at the stack top. For example, when the message at the stack top is of the alarm type, the message management module 22 may display the alarm-type message if determining that the identifier "flag indicating whether to display" of the message at the stack top is 1. When the message at the stack top is of the reminder type, the message management module 22 determines that the identifier "flag indicating whether to display" of the message at the stack top is 1, and further needs to determine that storage duration of the message is less than the preset storage duration and the message has reminder time validity, so as to display the reminder-type message. For example, a currently displayed message in FIG. 6A is the reminder-type message P4 at the stack top. In addition, a display order of messages in the stack is an order from the stack top to the stack bottom. For example, whether the messages are to be displayed is sequentially determined according to a display order indicated by an arrow L2. For example, when the display module 21 displays the reminder-type message P4, if storage duration of the reminder-type message P4 is greater than the preset storage duration (for example, 5 seconds), the message management module 22 may mark an identifier "flag indicating whether to display" of the reminder-type message P4 at the stack top with 0 and enable the message to be popped from the stack. For another example, assuming that the alarm-type message P3 is stored at the stack top and the display module 21 is displaying the message, if the display module 21 receives a user operation of manually canceling display of the alarm-type message P3, the message management module 22 marks an identifier "flag indicating whether to display" of the alarm-type message P3 at the stack top with 0 and enables the message to be popped from the stack.

In addition, in some other embodiments, the message management module 22 may enable the message to be popped from the stack when a display text is in a middle position of the stack and the corresponding identifier "flag indicating whether to display" is marked with 0.

Further, based on FIG. 6A, refer to FIG. 6B. By using a difference between a timestamp of a reminder-type message and current system time, the message management module 22 may determine storage duration of the message. Further, the storage duration of the message is compared with the preset storage duration, to determine whether the message has reminder time validity. For example, the alarm-type message P2 and the alarm-type message P2 that are stored in the stack shown in FIG. 6B have no timestamp, the reminder-type message P1 has a timestamp T1, and the reminder-type message P4 has a timestamp T2.

In some embodiments, still refer to FIG. 6B. After the display module 21 displays a message, display of the message may be further canceled. For example, for a reminder-type message, the message management module 22 may compare display duration of the message with preset display duration (for example, 5 seconds). If the display duration is greater than the preset display duration, display is automatically canceled. If the display duration is less than or equal to the preset display duration, the display module 21 continues to display the display. For example, for an alarm-type message, if the display module 21 receives a user operation of manually canceling display of the message, display is canceled. Otherwise, display continues.

To be specific, pop logic of the message management module 21 includes: 1. The display text is located at the stack top. 2. The identifier "flag indicating whether to display" is marked with 1. 3. A reminder-type message in the type I reporting is valid if a validity period does not expire.

Pop logic of the display module 21 includes: 1. The user manually confirms to cancel display of a message. 2. A reminder-type message in the type I reporting is invalid if a validity period expires.

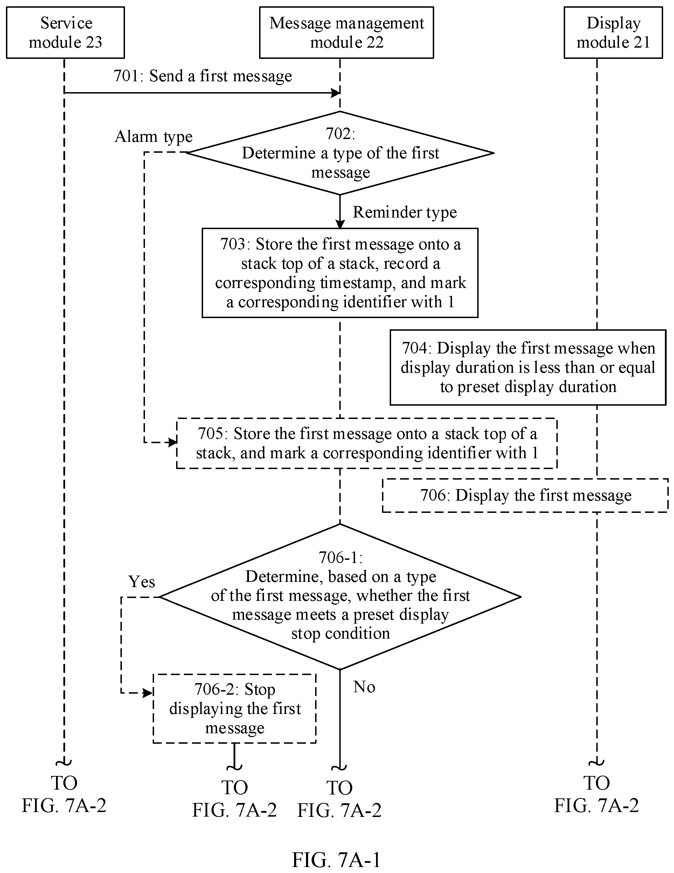

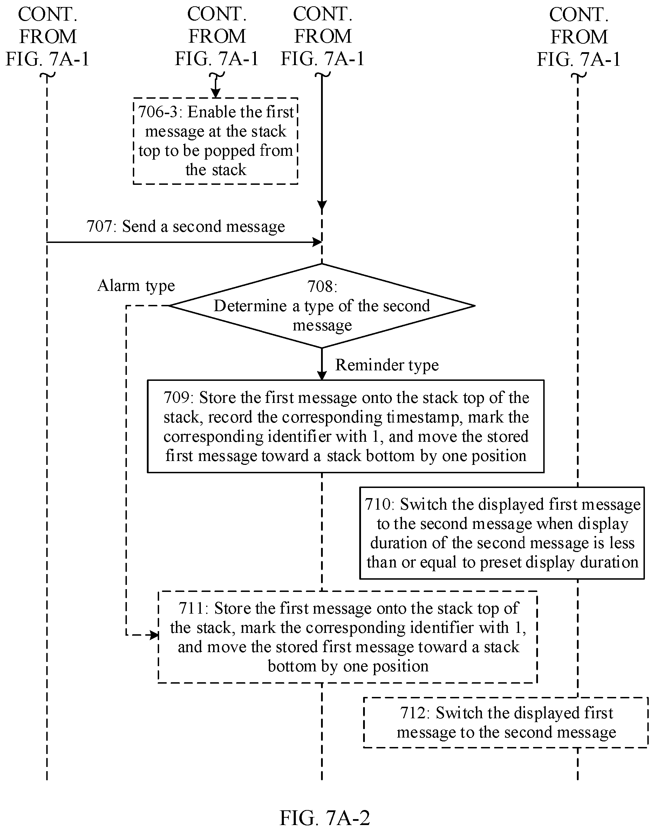

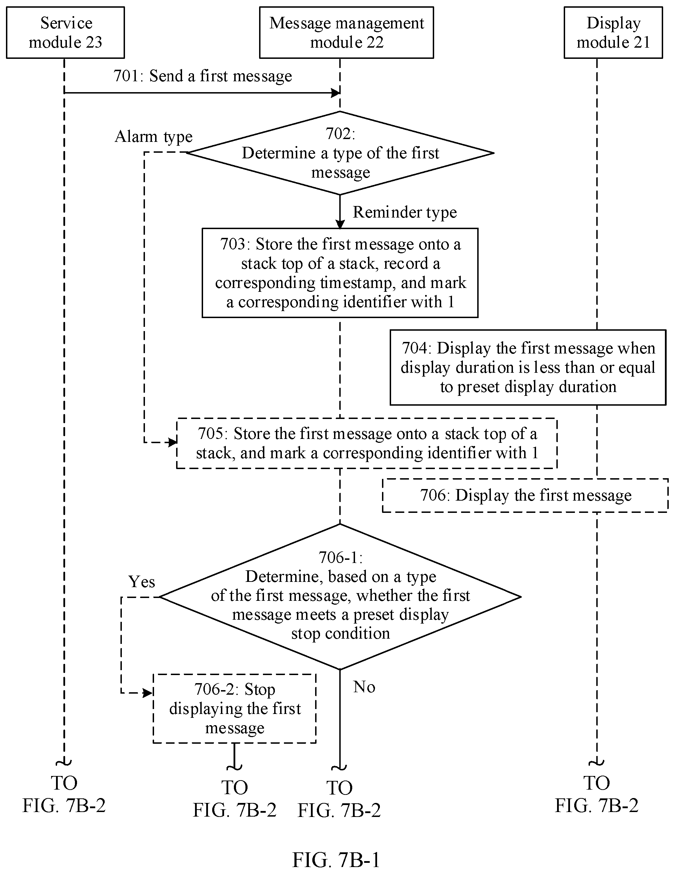

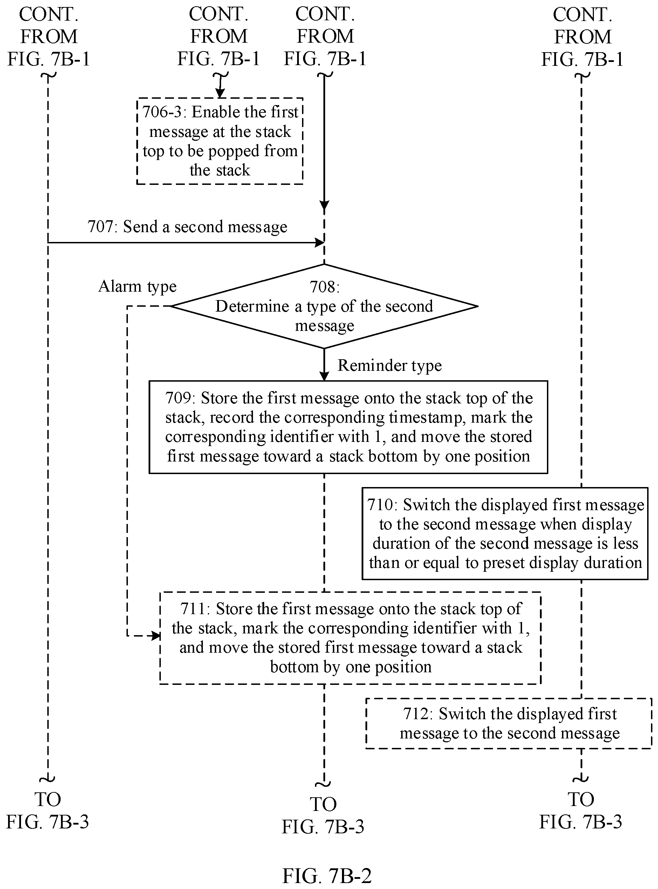

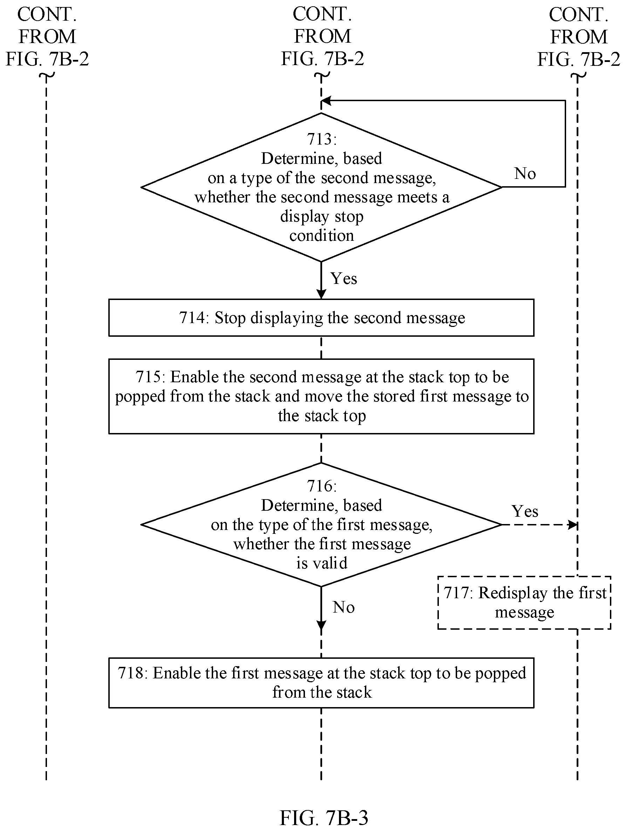

Next, based on the message display method shown in FIG. 4, with reference to the message management architecture shown in FIG. 6A and FIG. 6B, the message display method in this application is described in detail with reference to FIG. 7. The method may be performed by the service module 23, the message management module 22, and the display module 21.

Refer to FIG. 7. The message display method includes the following steps:
S701: The service module 23 sends a first message to the message management module 22.
S702: The message management module 22 determines a type of the first message, and if the message management module 22 determines that the first message is of a reminder type, S703 and S704 are performed, or if the message management module 22 determines that the first message is of an alarm type, S705 and S706 are performed.
   For example, a type of a message is determined by identifying whether the message carries a timestamp. To be specific, a message with a timestamp is of the reminder type, and a message without a timestamp is of the alarm type.
S703: When the first message is of the reminder type, the message management module 22 stores the first message onto a stack top of a stack, records a corresponding timestamp, and marks a corresponding identifier "flag indicating whether to display" with 1.
   In some embodiments, a detected new message may be considered valid by default. For example, when the first message is stored, the corresponding identifier "flag indicating whether to display" is marked with 1, to indicate that the first message is valid.
S704: When display duration is less than preset display duration, the display module 21 displays the first message.
S705: When the first message is of the alarm type, the message management module 22 stores the first message onto the stack top of the stack, and marks the corresponding identifier "flag indicating whether to display" with 1.
S706: When the first message is of the alarm type, the display module 21 displays the first message.
S706-1: The message management module 22 determines, based on the type of the first message, whether the first message meets a preset display stop condition. If yes, S706-2 is performed. If no, S706-3 is performed.
S706-2: The message management module 22 stops displaying the first message.
S706-3: The message management module 22 enables the first message at the stack top to be popped from the stack.
S707: The service module 23 sends a second message to the message management module 22.
S708: The message management module 22 determines a type of the second message, and if the message management module 22 determines that the first message is of the reminder type, S709 and S710 are performed, or if the message management module 22 determines that the first message is of the alarm type, S711 and S712 are performed.
S709: When the first message is of the reminder type, the message management module 22 stores the first message onto the stack top of the stack, records the corresponding timestamp, marks the corresponding identifier "flag indicating whether to display" with 1, and moves the stored first message towards a stack bottom by one position.
S710: When the first message is of the reminder type, the display module 21 switches the displayed first message to the second message, and records display duration of the first message.
S711: When the first message is of the alarm type, the display module 21 stores the first message onto the stack top, marks the corresponding identifier "flag indicating whether to display" with 1, and moves the stored first message towards the stack bottom by one position.
S712: The display module 21 switches the displayed first message to the second message.

In this way, according to the message display method provided in this application, when the messages stored in the stack cyclically enter the stack top according to a last-in display order, a latest message may be always displayed, so as to ensure that the user sees the latest message in time.

Further, based on FIG. 7A-1 and FIG. 7A-2, refer to a schematic flowchart of a method shown in FIG. 7B-1 to FIG. 7B-3. The message display method further includes the following steps after S701-S712:

S713: Determine, based on the type of the second message, whether the second message meets a preset display stop condition; and if the second message meets the preset display stop condition, S714 is performed; or if the second message does not meet the preset display stop condition, S713 continues to be performed.

For example, for a reminder-type message, a preset display stop condition includes but is not limited to: display duration is greater than preset display duration (for example, 5 seconds).

For example, for an alarm-type message, the preset display stop condition includes but is not limited to: receiving a cancellation instruction of the user, for example, a press operation instruction (that is, a user operation) of the user for the volume down button 11 of the wearable device 10.

S714: The display module 21 cancels display of the second message.

In some embodiments, when the second message meets the preset display stop condition, the service module 23 does not report a new message.

S715: The message management module 22 enables the second message at the stack top to be popped from the stack, and moves the stored first message to the stack top. In this case, the message management module 22 may further mark the identifier "flag indicating whether to display" corresponding to the second message at the stack top with 0.

S716: Determine, based on the type of the first message, whether the first message is valid, that is, perform validity determining on the stored first message. If it is determined that the first message is valid, S717 is performed; or if it is determined that the first message is invalid, S718 is performed.

In some embodiments, when a message is of the alarm type, validity determining on the message includes: if an identifier "flag indicating whether to display" corresponding to the message is 0, and/or a cancellation instruction of the user (for example, a press operation instruction of the user for the volume down button 11 of the wearable device 10, also referred to as a user operation) for the message is received, determining that the stored message is invalid. Otherwise, it is determined that the stored message is valid.

In some embodiments, before the display module 22 cancels the second message, if the message management module 22 receives third information sent by the service module 23, the message management module 22 traverses alarm-type messages in the stack based on a type parameter in the third message, and determines that the first message and the third information have associated type parameters. For example, it is assumed that a trigger condition is whether acceleration is greater than preset acceleration. For example, the first message is a message that is triggered for generation when the acceleration is greater than the preset acceleration and that is used to warn the user that descending acceleration is excessively large, and the third information is triggered for generation when the acceleration is less than or equal to the preset acceleration. In this case, the message management module 22 may mark the identifier "flag indicating whether to display" corresponding to the first message in the stack with 0.

In some embodiments, when a message is of the reminder type, validity determining on the message includes: if storage duration of the message is greater than or equal to preset storage duration, that is, a difference between time in a timestamp of the message and current system time is greater than or equal to the preset storage duration, determining that the stored message is invalid. Otherwise, it is determined that the stored message is valid. For example, if the message management module 22 determines that a difference between time in a timestamp of the first message and current system time is greater than or equal to the preset storage duration, the message management module 22 marks the identifier "flag indicating whether to display" corresponding to the first message in the stack with 0.

S717: The display module 21 redisplays the first message.

S718: The message management module 22 enables the first message at the stack top to be popped from the stack.

It should be noted that for specific descriptions of steps S701 to S718 in this application, sequentially refer to related descriptions of steps S402 to S419 shown in FIG. 4. Details are not described herein again.

It may be understood that, according to the message management method provided in this application, when the messages stored in the stack cyclically enter the stack top according to a last-in display order, if the message is still valid, the message may be redisplayed, so as to avoid a case that the valid message is lost and cannot be displayed, and an invalid message is not displayed. In other words, time validity of each message is ensured when a conflict occurs.

Next, with reference to the message management architecture shown in FIG. 6A and

FIG. 6B and the scenario diagram shown in FIG. 3A, the message display method in this application is described in detail with reference to FIG. 8A. The method may be performed by the service module 23, the message management module 22, and the display module 21. In addition, with reference to FIG. 8B, a change of a message stored in a stack in a process of performing the method shown in FIG. 8A is described.

Refer to FIG. 8A. The message display method includes the following steps:
S801: The service module 23 sends an alarm-type message M1 to the message management module 22, that is, performs type II reporting once.
S802: The message management module 22 stores the message M1 onto a stack top of a stack, and marks a corresponding identifier "flag indicating whether to display" with 1.
S803: The display module 21 displays the message M1 when determining that the identifier "flag indicating whether to display" of the message M1 at the stack top is 1.
S804: The service module 23 sends a reminder-type message M2 to the message management module 22, that is, performs type I reporting once.
S805: The message management module 22 stores the message M2 onto the stack top of the stack, marks an identifier "flag indicating whether to display" corresponding to the message M2 with 1, records a corresponding timestamp K1, and moves the stored message M1 towards a stack bottom by one position.
S806: The display module 21 switches the displayed message M1 to the message M2 when determining that the identifier "flag indicating whether to display" of the message M2 at the stack top is 1.
S807: If the display module 21 determines that display duration of the message M2 is equal to preset display duration, the display module 21 automatically cancels display of the message M2.
S808: The message management module 22 enables the message M2 at the stack top to be popped from the stack, and moves the stored message M1 to the stack top.
   In some other embodiments, the message management module 22 determines whether storage duration of the message M2 is greater than preset storage duration. For example, the display module 21 may determine, at a 6^{th} second, that a difference between the timestamp of the message M2 and current system time is greater than the preset storage duration, to determine that the message M2 is invalid.
S809: The display module 21 redisplays the message M1 when determining that the identifier "flag indicating whether to display" of the message M1 is 1.
S810: The display module 21 cancels display of the message M1 when receiving a user operation of canceling display of the message M2 from the user.
S811: The message management module 22 enables the message M1 at the stack top to be popped from the stack.

As shown in FIG. 8B, the message M1 is stored at the stack top from a 0^{th} second to a 1^{st} second, and the corresponding identifier "flag indicating whether to display" is marked with 1. The message M2 is stored at the stack top from the 1^{st} second to the 6^{th} second, the message M1 is located in a next position below the stack top, and the identifiers "flag indicating whether to display" corresponding to the two messages are kept as 1. At the 6^{th} second, the M2 message is popped from the stack. In this way, the message M1 is at the stack top from the 6^{th} second to the 8^{th} second, and the message M1 is popped from the stack after the 8^{th} second.

In this way, it is ensured that the latest message M2 is presented to the user in time, and it is ensured that the message M1 is cleared after being learned of by the user, thereby avoiding a case that the user misses an important reminder and alarm.

Further, with reference to the diagram of the scenario shown in FIG. 3B-1 and FIG. 3B-2, based on FIG. 8A, FIG. 9A is a schematic flowchart of another message display method. In addition, with reference to FIG. 9B, a change of a message stored in a stack in a process of performing the method shown in FIG. 9A is described.

The message display method shown in FIG. 9A includes the following steps:
S901-S906. Descriptions of S901-S906 are respectively the same as those of S801-S806 in the embodiment shown in FIG. 8A, and details are not described herein again.

Further, after S906, the method shown in FIG. 9A further includes the following steps:
S907: The service module 23 reports cancellation information (for example, third information) to the message management module 22, where the cancellation message is of type III reporting. A trigger condition of the cancellation information is the same as that of the alarm-type message M1, that is, the cancellation information is of the same type as the message M1. In this case, the cancellation information is used to clear the stored message M1.
S908: The message management module 22 traverses alarm-type messages in the stack, determines that the message M1 is of the same type as the cancellation information, and marks the identifier "flag indicating whether to display" corresponding to the stored message M1 with 0.
S909: If the display module 21 determines that display duration of the message M2 is equal to preset display duration, the display module 21 automatically cancels display of the message M2.
S910: The message management module 22 enables the message M2 at the stack top to be popped from the stack, and moves the stored message M1 to the stack top.
S911: The message management module 22 enables the message M1 at the stack top to be popped when determining that the identifier "flag indicating whether to display" of the message M1 is 0.

As shown in FIG. 9B, the message M1 is stored at the stack top from a 0^{th} second to a 1^{st} second, and the corresponding identifier "flag indicating whether to display" is marked with 1. The message M2 is stored at the stack top from the 1^{st} second to the 6^{th} second, the message M1 is located in a next position below the stack top, and the identifiers "flag indicating whether to display" corresponding to the two messages are still 1. At a 4^{th} second, the identifier "flag indicating whether to display" corresponding to the message M1 is marked with 0. Then, the message M2 is popped from the stack at the 6^{th} second, and the message M1 is also popped from the stack after the 6^{th} second.

In this way, it is ensured that the latest message M2 is presented to the user in time, and an invalid message M1 is avoided from being presented to the user, so as to avoid misjudgment by the user.

Next, with reference to the message management architecture shown in FIG. 6A and FIG. 6B and the scenario diagram shown in FIG. 4C, the message display method in this application is described in detail with reference to FIG. 10. The method may be performed by the service module 23, the message management module 22, and the display module 21. In addition, with reference to FIG. 10B, a change of a message stored in a stack in a process of performing the method shown in FIG. 10A is described.

As shown in FIG. 10, the method includes the following steps:
S1001: The service module 23 sends a reminder-type message M2 to the message management module 22, that is, performs type I reporting once.
S1002: The message management module 22 stores the message M2 onto a stack top of a stack, marks a corresponding identifier "flag indicating whether to display" with 1, and records a corresponding timestamp K1 (for example, the 0^{th} second in FIG. 4C).
S1003: The display module 21 displays the message M2 when determining that the identifier "flag indicating whether to display" of the message M2 at the stack top is 1. In this case, a difference between the timestamp corresponding to the message M2 and current system time is less than preset storage duration (for example, 5 seconds), and the difference may be a relatively small value, for example, 0.2 seconds.
S1004: The service module 23 sends an alarm-type message M3 to the message management module 22, that is, performs type II reporting once.
S1005: The message management module 22 stores the message M3 onto the stack top of the stack, marks the identifier "flag indicating whether to display" corresponding to the message M2 with 1, and moves the stored message M1 towards a stack bottom by one position.
S1006: The display module 21 determines that the identifier "flag indicating whether to display" corresponding to the message M2 is 1, and switches the displayed message M2 to the message M3.
S1007: The display module 21 cancels display of the message M3 when receiving a user operation of canceling display of the message M3 from the user.
S1008: The message management module 22 enables the message M3 at the stack top to be popped from the stack, and moves the stored message M2 to the stack top.
S1009: The message management module 22 marks the identifier "flag indicating whether to display" of the message M2 with 0 when determining that a difference between the timestamp corresponding to the message M2 and current system time is greater than preset storage duration.

In some other embodiments, the message management module 22 may periodically query whether storage duration of each reminder-type message in the stack is greater than the preset storage duration, and if yes, immediately mark a corresponding identifier "flag indicating whether to display" with 0. For example, the message management module 22 may mark the identifier "flag indicating whether to display" of the message M1 with 0 when detecting, after a 5^{th} second, that the difference between the timestamp corresponding to the message M2 and the current system time is greater than the preset storage duration.

S1010: The message management module 22 enables the message M2 at the stack top to be popped from the stack.

As shown in FIG. 10B, the message M2 is stored at the stack top from a 0^{th} second to a 2^{nd} second, and the corresponding identifier "flag indicating whether to display" is marked with 1. The message M3 is stored at the stack top from the 2^{nd} second to a 6^{th} second, and the corresponding identifier "flag indicating whether to display" is still 1. The message M1 is located in a next position below the stack top from the 2^{nd} second to the 5^{th} second, and the corresponding identifier "flag indicating whether to display" is still 1. In this way, the message M1 is located in the next position below the stack top from the 5^{th} second to the 6^{th} second, and the corresponding identifier "flag indicating whether to display" is marked with 0. In addition, the message M3 is first popped from the stack at the 6^{th} second, and then the message M2 is popped from the stack when moved to the stack top after the 6^{th} second.

In this way, it is ensured that the latest message M3 is presented to the user in time, the user is prevented from seeing the message M2 that does not have time validity, and the user is prevented from learning of an incorrect message.

Further, with reference to the diagram of the scenario shown in FIG. 6B, based on FIG. 10A, FIG. 11A is a schematic flowchart of another message display method. In addition, with reference to FIG. 11B, a change of a message stored in a stack in a process of performing the method shown in FIG. 11A is described.

S1101-S1008. Descriptions of S1101-S1108 are respectively the same as those of S1001-S1008 in the embodiment shown in FIG. 10, and details are not described herein again.

Further, after S1106, the method shown in FIG. 11 further includes the following steps:
S1109: The message management module 22 determines that a difference between the timestamp corresponding to the message M2 and current system time is less than preset storage duration.

In some other embodiments, the message management module 22 may periodically query whether storage duration of each reminder-type message in the stack is greater than the preset storage duration.

S1110: The display module 21 redisplays the message M2 when determining that the identifier "flag indicating whether to display" corresponding to the message M2 is 1.

As shown in FIG. 11B, the message M2 is stored at the stack top from a 0^{th} second to a 2^{nd} second, and the corresponding identifier "flag indicating whether to display" is marked with 1. The message M3 is stored at the stack top from the 2^{nd} second to a 4^{th} second, the message M2 is located in a next position below the stack top, and the identifiers "flag indicating whether to display" corresponding to the two messages are still 1. In this way, the message M3 is first popped from the stack at the 4^{th} second. Then, when the message M2 is moved to the stack top after the 4^{th} second, the corresponding identifier "flag indicating whether to display" is still 1. In this case, the message M2 may be redisplayed.

In this way, it is ensured that the latest message M3 is presented to the user in time, and the message M2 is redisplayed when the message M2 still has time validity, thereby avoiding a case that the user misses an important alarm and reminder.

In some embodiments, this application provides a readable medium, where the readable medium stores instructions, and when the instructions are executed on an electronic device, the electronic device is enabled to perform the message display method in the foregoing embodiment.

Embodiments of a mechanism disclosed in this application may be implemented in hardware, software, firmware, or a combination of these implementation methods. Embodiments of this application may be implemented as a computer program or program code executed on a programmable system. The programmable system includes at least one processor and a storage system (including a volatile and nonvolatile memory and/or a memory element), at least one input device, and at least one output device.

The program code may be applied to input instructions, to perform functions described in this application and generate output information. The output information may be used in one or more output devices in a known manner. For a purpose of this application, a processing system includes any system with a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code can also be implemented in an assembly language or a machine language when needed. Actually, the mechanism described in this application is not limited to a scope of any particular programming language. In either case, the language may be a compiled language or an interpreted language.

In some cases, the disclosed embodiments may be implemented by hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (for example, a computer) readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a nonexclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A message display method, applied to an electronic device, wherein the method comprises:
starting to display a first message, wherein the first message is stored in a target storage unit and is a message with a last trigger order in the target storage unit;
detecting, after the first message is displayed for first time, that a second message is a message with a last trigger order in the target storage unit; and
displaying the second message, wherein the first message continues to be stored in the target storage unit.

2. The method according to claim 1, wherein the method further comprises:
after it is detected that display of the second message is completed, determining that the first message in the target storage unit meets a validity condition, wherein the first message is a message with a last trigger order in the target storage unit; and
redisplaying the first message.

3. The method according to claim 2, wherein the method further comprises:
the target storage unit is a message stack, messages enter the message stack sequentially according to trigger orders from earlier to later, and a stack top of the message stack stores a message with a last trigger order in the message stack.

4. The method according to claim 3, wherein the method further comprises:
after it is detected that display of the second message is completed, deleting the second message from the stack top, and moving the first message to the stack top.

5. The method according to claim 4, wherein the method further comprises:
when it is determined that the first message in the message stack does not meet the validity condition, deleting the first message from the stack top, and sequentially moving remaining messages in the message stack towards the stack top by one position.

6. The method according to claim 4, wherein
when a message type comprises a reminder type and an alarm type, the validity condition comprises: duration for storing a reminder-type message in the message stack is less than or equal to preset storage duration, or a trigger condition corresponding to an alarm-type message is met.

7. The method according to claim 4, wherein
when a message type comprises a reminder type and an alarm type, the validity condition comprises: duration for storing a message in the message stack is less than or equal to corresponding preset storage duration, wherein preset storage duration corresponding to a reminder-type message is less than preset storage duration corresponding to an alarm-type message.

8. The method according to claim 6, wherein the method further comprises:
when the redisplayed first message does not meet the validity condition, stopping displaying the first message.

9. The method according to claim 7, wherein each message in the message stack corresponds to one validity flag bit, and a value of the validity flag bit being a first value indicates that a corresponding message meets the validity condition, or a value of the validity flag bit being a second value indicates that the corresponding message does not meet the validity condition.

10. The method according to claim 9, wherein the method further comprises:
when storage duration of the reminder-type message in the message stack is less than or equal to the preset storage duration, setting the corresponding validity flag bit to the first value; or
when storage duration of the reminder-type message is greater than the preset storage duration, modifying the corresponding validity flag bit from the first value to the second value; or
when a trigger condition corresponding to the alarm-type message is met, setting the corresponding validity flag bit to the first value; or
when a trigger condition corresponding to the alarm-type message is not met, modifying the corresponding validity flag bit from the first value to the second value.

11. The method according to claim 10, wherein the method further comprises:
after it is detected that the second message is located at the stack top of the message stack, moving the first message from the stack top towards a stack bottom by one position in the message stack, and storing the second message onto the stack top.

12. The method according to claim 11, wherein the method further comprises:
after it is detected that the second message is located at the stack top of the message stack, setting the validity flag bit corresponding to the second message to the first value.

13. The method according to any one of claims 1 to 12, wherein a display-completed message meets a preset display stop condition; and
when the message type comprises the reminder type and the alarm type, the preset display stop condition comprises: detecting a display cancellation instruction of a user for the alarm-type message, or detecting that display duration of the reminder-type message is greater than preset display duration.

14. The method according to claim 13, wherein the detecting, after the first message is displayed for first time, that a second message is a message with a last trigger order in the target storage unit comprises:
after the first message is displayed for the first time, detecting that the first message does not meet the preset display stop condition, and detecting that the second message is a message with a last trigger order in the target storage unit.

15. The method according to claim 13, wherein
when the first message is of the reminder type, the first time is less than the preset display duration; or
when the first message is of the alarm type, no display cancellation instruction of the user for the first message is detected within the first time.

16. The method according to claim 3, wherein in a case in which a message type comprises a reminder type and an alarm type, each reminder-type message in the message stack corresponds to one timestamp, and an alarm-type message in the message stack has no timestamp.

17. A computer program product, wherein the computer program product comprises instructions, and when executed, the instructions cause the computer to perform the message display method according to claims 1 to 16.

18. A readable medium, wherein the readable medium stores instructions, and when executed on an electronic device, the instructions cause the electronic device to perform the message display method according to claims 1 to 16.

19. An electronic device, comprising: a memory, configured to store instructions executed by one or more processors of the electronic device; and a processor, one of the processors of the electronic device and configured to perform the message display method according to claims 1 to 16.
